# EUROPÄISCHE PATENTSCHRIFT

(11) **EP 2 817 860 B1**
(45) Veröffentlichungstag und Bekanntmachung des Hinweises auf die Patenterteilung: **06.02.2019**
(21) Anmeldenummer: 13704771.8
(22) Anmeldetag: 14.02.2013
(51) Int. Cl.: H02H 3/10, H02H 7/12, H02H 3/20, H02H 3/24, H02H 1/06, H02H 3/26, H02H 7/10, G01R 19/165, G05B 9/02

(54) **SICHERHEITSSCHALTVORRICHTUNG MIT NETZTEIL**
SAFETY SWITCHGEAR WITH POWER SUPPLY UNIT
DISPOSITIF DE COMMUTATION DE SÉCURITÉ AVEC BLOC D'ALIMENTATION

(30) Priorität: 24.02.2012 DE 102012101516
(43) Veröffentlichungstag der Anmeldung: 31.12.2014
(73) Patentinhaber: Pilz GmbH & Co. KG, 73760 Ostfildern (DE)
(72) Erfinder: VEIL, Richard, 73760 Ostfildern (DE); MUELLER, Udo, 73760 Ostfildern (DE)
(74) Vertreter: Witte, Weller & Partner Patentanwälte mbB
(86) Internationale Anmeldenummer: PCT/EP2013/052952
(87) Internationale Veröffentlichungsnummer: WO 2013/124203

(56) Entgegenhaltungen:
- AT-B- 385 866
- DE-A1- 3 638 035
- DE-B3-102004 020 539
- DE-B3-102010 054 386
- US-A1- 2010 123 978

## Beschreibung

Die vorliegende Erfindung betrifft eine Sicherheitsvorrichtung, insbesondere eine Sicherheitsschaltvorrichtung, zum fehlersicheren Ein- oder Ausschalten einer gefährlichen Anlage mit einem Eingang zum Aufnehmen eines Eingangssignals, mit einer fehlersicheren Steuer/Auswerteeinheit, die das Eingangssignal verarbeitet, um in Abhängigkeit davon ein Ausgangssignal zum Ein- oder Ausschalten der gefährlichen Anlage zu erzeugen, und mit einem Netzteil zum Bereitstellen zumindest einer Betriebsspannung für die Steuer/Auswerteeinheit, wobei das Netzteil einen Spannungswandler zum Umwandeln einer Eingangsspannung in einer der Betriebsspannung entsprechende Ausgangsspannung eines definierten Ausgangsspannungswertes aufweist.

Eine Sicherheitsschaltvorrichtung dieser Art ist beispielsweise aus DE 10 2006 004 558 A1 bekannt.

Eine Sicherheitsschaltvorrichtung bzw. eine fehlersichere Steuer/Auswerteeinheit im Sinne der vorliegenden Erfindung ist jede Schaltvorrichtung bzw. Steuer/Auswerteeinheit (z.B. CPU oder Mikrokontroller), die die erforderlichen Sicherheitsnormen erfüllt, insbesondere zumindest die Kategorie 3, bevorzugt sogar die Kategorie 4, und/oder ein entsprechendes PL (Performance Level) nach der Norm EN ISO 13849-1 und/oder ein entsprechendes SIL (Safety Integrity Level) nach EN/IEC 62061 oder eine vergleichbare Sicherheitsnorm beispielsweise die nun nicht mehr gültige europäischen Norm EN 954-1. Hierunter fallen insbesondere Schaltgeräte, Sicherheitssteuerungen, sowie Sensor- und Aktuatormodule, die für die Steuerung und Durchführung von sicherheitskritischen Aufgaben im Bereich industrieller Produktionsumgebungen eingesetzt werden. Dabei sind insbesondere Schaltgeräte bekannt, die die Betriebsstellung eines Not-Aus-Schalters oder einer Schutztür oder beispielsweise den Funktionszustand einer Lichtschranke überwachen und in Abhängigkeit davon eine Maschine oder einen Maschinenbereich abschalten. Ein Versagen derartiger Sicherheitsschaltvorrichtungen kann für Maschinenpersonal lebensgefährliche Folgen haben, weshalb Sicherheitsschaltvorrichtung nur verwendet werden dürfen, wenn sie durch die zuständigen Aufsichtsbehörden (in Deutschland beispielsweise die Berufsgenossenschaften) zugelassen sind.

Eine solche Sicherheitsschaltvorrichtung ist beispielsweise aus DE 10 2010 054 386 B3 oder aus der zuvor genannten DE 10 2006 004 558 A1 bekannt, die jeweils eine Sicherheitsschaltvorrichtung zum sicheren Abschalten eines elektrischen Verbrauchers betreffen. Die Sicherheitsschaltvorrichtung weist einen Eingang zum Anschließen eines Meldegeräts, eine ausgangsseitige Schalteinrichtung zum sicheren Abschalten des Verbrauchers, eine Steuer/Auswerteeinheit, die in Abhängigkeit von dem Meldegerät die Schalteinrichtung ansteuert, und ein Netzteil zum Bereitstellen einer Betriebsspannung auf.

Ein Netzteil dient ganz allgemein dazu, eine bestimmte Betriebsspannung für ein Gerät oder eine Baugruppe, insbesondere Steuer/Auswerteeinheit, bereitzustellen, insbesondere eine andere Spannung als vom Stromnetz bereitgestellt. Das Netzteil weist einen Spannungswandler, oder auch Übertrager genannt, auf zum Umwandeln einer Eingangsspannung in eine der Betriebsspannung entsprechende Ausgangsspannung. Die Ausgangsspannung bzw. Betriebsspannung ist insbesondere eine Gleichspannung. Man unterscheidet zwischen externen Netzteilen, die meist über ein Kabel mit dem Gerät verbunden sind, und internen Netzteilen, die innerhalb des Gerätes angeordnet sind bzw. darin integriert sind.

Bei externen Netzteilen kann beispielsweise eine eingangsseitige Netzspannung, die von einem Energieversorgungsunternehmen bereitgestellt wird, in eine Ausgangsspannung bzw. Betriebsspannung für elektrische oder elektronische Geräte, die mit der vorhandenen Netzspannung nicht betrieben werden können, umgewandelt werden. Beispielsweise erzeugt ein Netzteil aus einer Netzspannung von 230 Volt AC (Wechselspannung) eine Betriebsspannung von 24 Volt DC (Gleichspannung), die für den Betrieb eines bestimmten Gerätes benötigt wird.

Bei Sicherheitsschaltvorrichtungen muss üblicherweise zum Schutz vor gefährlichen Körperströmen ein externes Netzteil verwendet werden, dessen maximale Ausgangsspannung auch bei Bauteilfehlern einen für Menschen ungefährlichen Wert nicht übersteigt, beispielsweise ein Netzteil mit PELV (Protective Extra-Low Voltage) oder SELV (Safety Extra-Low Voltage). Von außen auf die Sicherheitsschaltvorrichtung eingespeisten Überspannungen müssen deshalb aufgrund des Berührschutzes mit maximal ca. 65 Volt angenommen werden. Die Nennspannung ist üblicherweise 24 Volt. Bei einem Netzteil einer Sicherheitsschaltvorrichtung ist die Eingangsspannung daher üblicherweise eine Spannung, die kleiner als die Netzspannung ist. Beispielsweise kann eine Eingangsspannung von 24 Volt in eine kleinere Ausgangsspannung umgewandelt werden, wie beispielsweise 5 Volt oder ein niedrigerer Wert.

Das Netzteil der Sicherheitsschaltvorrichtung kann beispielsweise so dimensioniert sein, dass es, bei einer Nennspannung von z.B. 24 V, auch bei Einspeisung von maximal 65V nicht überbeansprucht wird. Die extern auftretende Überspannung kann also durch geeigneten Schaltungsaufbau und entsprechende Bauteilauswahl beherrscht werden. Im Fall von Bauteildefekten bzw. Bauteilausfällen in den Netzteilen, beispielsweise bei eingespeisten 65V, könnte diese Spannung jedoch auf die versorgten Bauteile des Netzteils gelangen. Bei einer vorgesehenen Betriebsspannung, beispielsweise 5V oder niedrigeren Werten, können die versorgten Bauteile im Fall von internen Bauteildefekten/- ausfällen dann zerstört werden. Das kann zu einem unsicheren Zustand der Sicherheitsschaltvorrichtung führen. Es ist daher wünschenswert Maßnahmen zur Beherrschung dieser durch interne Bauteilausfälle im Netzteil verursachte Überspannungen vorzusehen.

Es sind Überspannungsüberwachungen für Sicherheitsschaltgeräte bekannt, bei denen bei Erkennen einer Überspannung am Eingang eines Gerätes (insbesondere außerhalb bzw. hinter einem Netzteil), der Strompfad zu diesem Gerät unterbrochen wird. Beispielsweise offenbart DE 10 2008 051 514 A1 eine Überspannungsüberwachung für ein Sicherheitsmodul zum sicheren Betrieb des Moduls, wobei eine Möglichkeit zur Stromabschaltung vorgesehen ist. Für diese Stromabschaltung muss eine hohe Zuverlässigkeit gewährleistet sein, daher wird mittels eines elektrisch ansteuerbaren Stromschaltmittels und eines Eingangsspannungsvergleichmittels die Stromabschaltung derart realisiert, dass der Strompfad zum Sicherheitsmodul nach Maßgabe des Vergleichsergebnisses unterbrochen werden kann. Eine andere Art der Spannungsüberwachung ist beispielsweise in DE 444 38 62 A1 offenbart. Eine weitere Art ist aus DE196 33 952 A1 bekannt.

Bei den bisher bekannten Sicherheitsschaltvorrichtungen wurden Netzteilfehler, wie durch Bauteildefekte verursachte Überspannungen, mit Maßnahmen außerhalb der Netzteile beherrscht. Eine Überspannung, die versorgte Bauteile zerstören kann, wurde angenommen und durch Überwachungsmaßnahmen und fehlersichere Ansteuerung der Ausgänge (bzw. hinter dem Netzteil) beherrscht.

Bei Netzteilen allgemein sind auch Überspannungsüberwachungen innerhalb eines Netzteils bekannt bzw. die dem Netzteil vorgeschaltet sind. Beispielsweise ist eine Überspannungsabschaltung unter Verwendung einer Klemmschaltung (englisch: crow bar) bekannt (http://de.wikipedia.org/wiki/ Klemmschaltung_(Stromversorgung)). Eine Klemmschaltung ist eine elektronische Schaltung, die als Schutz vor Überspannung vor allem in Gleichstromversorgungen niedriger Spannung eingesetzt wird. Dabei wird bei Erreichen einer bestimmten Spannung die Versorgungsspannung niederohmig kurzgeschlossen, so dass sie als Folge eine Sicherung auslösen kann und die Stromversorgung unterbricht. Die Klemmschaltung besitzt als Schaltelement meist einen Thyristor oder Triac, der mit seinen beiden Hauptanschlüssen (Kathode und Anode) direkt an die Versorgungsspannung geschaltet ist. Bei Erreichen eines kritischen Überspannungsniveaus wird der Thyristor über das Gate mittels einer Auslöseschaltung gezündet und erzeugt einen Kurzschluss der Versorgungsspannung. Der als Folge auftretende Kurzschlussstrom löst ein Sicherungselement aus, meistens eine Schmelzsicherung in der Zuleitung, und unterbricht dauerhaft die Stromversorgung. Diese Schmelzsicherung muss schnell genug auslösen, um Schaden an dem Thyristor zu vermeiden. Bei Verwendung von Schmelzsicherungen müssen diese nach Auslösung ersetzt werden.
Aus DE 36 38 035 A1 ist eine Abschalteinrichtung für ein geregeltes Stromversorgungsgerät bekannt, die einen Sensor besitzt, mit dem das Überschreiten eines vorgegebenen Schwellwertes der Ausgangsspannung des Stromversorgungsgerätes detektierbar ist. Dieser Sensor steuert einen bistabilen Schalter um, der die Versorgungsspannung eines Pulsbreitenmodulators kurzschließt. Der Pulsbreitenmodulator dient der Spannungs- oder Stromregelung des Stromversorgungsgerätes über einen Schalter. Die Abschalteinrichtung soll ein sicheres Abschalten von Verbrauchern bei Über- oder Unterspannungen gewährleisten.
Weitere Stromversorgungsgeräte mit einer integrierten Sicherung der zu versorgenden Verbraucher gegen Fremd- und Eigenfehler sind aus AT 385 866 B und aus US 2010/0123978 A1 bekannt.

Vor diesem Hintergrund ist es eine Aufgabe der vorliegenden Erfindung, eine Sicherheitsschaltvorrichtung der eingangs genannten Art anzugeben, die eine erhöhte Sicherheit aufweist und/oder eine wirtschaftlichere Reparatur ermöglicht.

Gemäß einem ersten Aspekt der Erfindung wird diese Aufgabe durch eine Sicherheitsschaltvorrichtung der eingangs genannten Art gelöst, wobei das Netzteil einen Fehlerdetektor zum Erkennen eines Fehlerzustands des Spannungswandlers aufweist, wobei der Fehlerdetektor einen Vergleicher zum Vergleichen der momentan vorhandenen Ausgangsspannung mit einer definierten Referenzspannung aufweist, wobei der Fehlerdetektor ein Fehlerzustandssignal liefert bei Erkennen einer bestimmten Abweichung von einer Referenzspannung, und wobei das Netzteil einen Schalter aufweist, der bei Vorliegen des Fehlerzustandssignals die Eingangsspannung des Spannungswandlers abschaltet, weiterhin mit zumindest einem Watchdog, der mit der fehlersicheren Steuer/Auswerteeinheit verbunden ist und bei Erkennen eines Fehlerzustands der Steuer/Auswerteeinheit ein Fehlerzustandssignal an den Schalter liefert, um die Eingangsspannung des Spannungswandlers abzuschalten.

Die neue Sicherheitsschaltvorrichtung verwendet also eine Überwachung der Ausgangsspannung des Spannungswandlers, um im Fehlerfall (insbesondere Bauteildefekt/-ausfall im Netzteil) die Eingangsspannung des Spannungswandlers abzuschalten. Das heißt, es wird (bezogen auf die Strom- bzw. Signalflussrichtung des Netzteils vom Eingang zum Ausgang) vor der Spannungsmessung oder Spannungsüberwachung (insbesondere dem Punkt an dem die Ausgangsspannung gemessen oder überwacht wird) abgeschaltet. Im Vergleich zu einer Abschaltung hinter der Spannungsmessung oder Spannungsüberwachung ist das Abschalten so einfacher, da kleinere Ströme geschaltet werden müssen. Die Sicherheitsschaltvorrichtung schaltet sich im Fehlerfall selbst die Energie ab bzw. die Eingangsspannung des Netzteils. Die Fehlerzustandserkennung und Abschaltung findet innerhalb des Netzteiles statt. Bei Erkennen des Fehlerzustands schaltet das Netzteil sich selbst ab. Eine durch Netzteildefekte bzw. Spannungswandlerdefekte verursachte Gefahr wird direkt am Entstehungsort, d.h. dem Netzteil bzw. Spannungswandler, ausgeschaltet. Es wird so der den Fehlerzustand (insbesondere Überspannung oder Unterspannung) verursachende Spannungsschaltungsteil abgeschaltet. In anderen Worten wird die Fehlerzustandsursache beseitigt. Insbesondere wird eine Überspannung oder Unterspannung direkt an der Stelle der möglichen Verursachung erfasst und direkt dort abgeschaltet. Durch dieses vorgelagerte Abschalten werden Folgefehler vermieden, wie sie durch ein aktives defektes Netzteil entstehen könnten, beispielsweise Übertemperatur oder sogar Brand in der Sicherheitsschaltvorrichtung, bei dem ein sicherer Zustand nicht mehr gewährleistet ist. Die neue Sicherheitsschaltvorrichtung ermöglicht daher eine erhöhte Sicherheit, insbesondere bei Bauteildefekten bzw. Bauteilausfällen im Netzteil, und ermöglicht eine wirtschaftliche Reparatur.
Außerdem wird eine zusätzliche Fehlerüberwachung der Steuer/Auswerteeinheit in Form eines Watchdogs bereitgestellt. Der Watchdog führt nach dem Ansprechen ebenfalls zum Abschalten der Eingangsspannung. Ein Watchdog ist allgemein eine Komponente der Vorrichtung, die die Funktion einer oder mehrerer anderer Komponenten der Vorrichtung überwacht. Der Watchdogs wird hier zur Überwachung der Steuer/Auswerteeinheit verwendet, um beispielsweise einem Komplettausfall der Vorrichtung durch Softwareversagen zuvorzukommen. Der Watchdog dient daher zur Überwachung der korrekten Funktionsfähigkeit der Steuer/Auswerteeinheit (z.B. CPU oder Mikrocontroller). Der Watchdog spricht bei Erkennen eines Fehlerzustands der überwachten Steuer/Auswerteeinheit an. Der Watchdog leitet dann eine Sicherheitsreaktion ein durch Abschalten der Eingangsspannung des Spannungswandlers. Durch das Abschalten der Eingangsspannung bzw. Energieversorgung können so Folgefehler, wie beispielsweise ein Schwingen eines Treibers in der Ansteuerung der Ausgänge der Sicherheitsschaltvorrichtung, ausgeschlossen werden.
Der Watchdog kann insbesondere ein Hardware-Watchdog (HW-Watchdog) sein. Der Watchdog kann beispielsweise eine separate Komponente (außerhalb der Steuer/Auswerteeinheit) mit Kommunikation zur Steuer/Auswerteeinheit sein oder kann in der Steuer/Auswerteeinheit integriert sein. Alternativ kann der Watchdog auch ein Software-Watchdog (SW-Watchdog) sein. Ein SW-Watchdog ist üblicherweise in die Steuer/Auswerteeinheit integriert und dient insbesondere zur Überwachung des korrekten Softwareprogrammablaufs der Steuer/Auswerteeinheit.

Insgesamt ermöglicht die neue Sicherheitsschaltvorrichtung daher eine erhöhte Sicherheit. Die oben genannte Aufgabe ist daher vollständig gelöst.

In einer bevorzugten Ausgestaltung weist der Fehlerdetektor weiterhin einen Speicher zum Speichern des Fehlerzustandssignals auf. Insbesondere kann der Speicher einen mit dem Vergleicher verbundenen Eingang und zumindest einen den Schalter ansteuernden Ausgang aufweisen.

In dieser Ausgestaltung wird gewährleistet, dass die Eingangsspannung abgeschaltet bleibt, wenn die Ausgangsspannung nach erkanntem Fehlerzustand (z.B. Überspannung oder Unterspannung) ausgeschaltet ist. Die Sicherheit kann somit noch weiter erhöht werden. Gleichzeitig kann der Speicher durch ein zusätzliches kostengünstiges Bauteil, bzw. nur wenige zusätzliche kostengünstige Bauteile, bereitgestellt werden. Der zusätzliche Aufwand und die zusätzlichen Kosten sind daher gering.

In einer weiteren Ausgestaltung weist der Speicher weiterhin einen zweiten Eingang auf, der bei Einschalten der Eingangsspannung ein Signal zum Beenden des Speicherns des Fehlerzustandssignals empfängt.

In dieser Ausgestaltung wird der Power-On-Reset vom Netzteil selbst eingeleitet. Beispielsweise kann nach behobener Fehlerursache das Netzteil so durch erneutes Einschalten oder Hochfahren der Eingangsspannung wieder in Betrieb genommen werden. Dies erhöht die Verfügbarkeit der Sicherheitsschaltvorrichtung. Der zweite Eingang kann mit der Eingangsspannung verbunden sein. Der zweite Eingang kann beispielsweise mit einem Setzsignal-Erzeuger verbunden sein, der in Abhängigkeit von der Eingangsspannung das Signal zum Beenden des Speicherns erzeugt, insbesondere ein Setzsignal oder einen Setzimpuls.

In einer weiteren Ausgestaltung ist der Speicher eine bistabile Kippstufe. Insbesondere kann der erste Eingang ein Rücksetz-Eingang und/oder der zweite Eingang ist ein Setz-Eingang der bistabilen Kippstufe sein. Alternativ können die Eingänge auch vertauscht werden, so dass der erste Eingang ein Setz-Eingang der bistabilen Kippstufe und/oder der zweite Eingang ein Rücksetz-Eingang der bistabilen Kippstufe sein kann.

In dieser Ausgestaltung wird durch die bistabile Kippstufe eine einfache Implementierung des Speichers bereitgestellt. Eine bistabile Kippstufe ist ein besonders kostengünstiges zusätzliches Bauteil. Eine bistabile Kippstufe (auch Flip-Flop genannt, insbesondere RS-Flip-Flop) ist eine elektronische Schaltung, die zwei stabile Zustände einnehmen kann und den Zustand über eine lange Zeit speichern kann. Insbesondere kann der Rücksetz-Eingang von dem Vergleicher bei Erkennen des Fehlerzustands ein Rücksetzsignal empfangen und/oder der Setz-Eingang kann bei Einschalten der Eingangsspannung ein Setzsignal empfangen. Alternativ können die Eingänge auch vertauscht werden, wie oben beschrieben.

In einer bevorzugten Ausgestaltung liefert der Fehlerdetektor ein Fehlerzustandssignal bei Erkennen einer bestimmten Überschreitung der Referenzspannung, so dass der Fehlerzustand einer Überspannung der Ausgangsspannung entspricht.

In dieser Ausgestaltung wird das Überwachen auf Überspannung bereitgestellt. Der Fehlerdetektor erkennt insbesondere die für die versorgten Bauteile des Netzteils gefährlichen Überspannungen. Es kann so beispielsweise verhindert werden, dass Bauteile zerstört werden.

In einer weiteren Ausgestaltung liefert der Fehlerdetektor ein Fehlerzustandssignal bei Erkennen einer bestimmten Unterschreitung der Referenzspannung, so dass der Fehlerzustand einer Unterspannung der Ausgangsspannung entspricht.

In dieser Ausgestaltung wird ein Überwachen auf Unterspannung bereitgestellt. Der Fehlerdetektor erkennt insbesondere die für die versorgten Bauteile des Netzteils gefährlichen Unterspannungen. Es kann so beispielsweise ein Schwingen von Bauteilen verhindert werden. Diese Ausgestaltung ist besonders vorteilhaft in Kombination mit der vorhergehenden Ausgestaltung.

In einer weiteren Ausgestaltung ist der Schalter im Strompfad eines Eingangs des Spannungswandlers angeordnet, so dass der Schalter bei Vorliegen des Fehlerzustandssignals die Stromzufuhr zu dem Eingang des Spannungswandlers unterbricht.

In dieser Ausgestaltung wird eine direkte Abschaltung der Eingangsspannung bereitgestellt. Die Abschaltung erfolgt so auf besonders einfache und effektive Weise.

In einer weiteren Ausgestaltung weist der Spannungswandler einen Schaltregler zur Regelung eines Stromflusses durch den Spannungswandler auf, um die Ausgangsspannung auf den definierten Ausgangsspannungswert zu halten. Insbesondere kann der Schalter zum Abschalten der Eingangsspannung ein Schalttransistor des Schaltreglers sein.

In dieser Ausgestaltung wird ein Schaltnetzteil mit Schaltregler bereitgestellt. Das Netzteil ist somit ein Schaltnetzteil. Dieses liefert eine konstante und somit zuverlässige Ausgangsspannung. Die Zuverlässigkeit bzw. Sicherheit der Sicherheitsschaltvorrichtung wird somit erhöht, und zudem ein hoher Wirkungsgrad bereitgestellt. Wenn der Schalttransistor des Schaltreglers zum Abschalten der Eingangsspannung verwendet wird, so kann ein bereits vorhandener Schalttransistor für das Abschalten der Eingangsspannung genutzt werden. Es wird somit kein zusätzliches Schaltelement benötigt, wodurch die Kosten minimiert werden.

In einer weiteren Ausgestaltung weist der Schaltregler einen Eingang für eine Schaltreglerversorgungsspannung auf, und der Schalter ist im Strompfad des Eingangs für die Schaltreglerversorgungsspannung angeordnet, so dass der Schalter bei Vorliegen des Fehlerzustandssignals die Stromzufuhr zu dem Eingang des Schaltreglers unterbricht.

In dieser Ausgestaltung wird eine indirekte Abschaltung der Eingangsspannung bereitgestellt unter Verwendung eines Schaltnetzteils mit Schaltregler. Die Abschaltung erfolgt so auf besonders effiziente Weise.

In einer weiteren Ausgestaltung weist die fehlersichere Steuer/Auswerteeinheit zumindest zwei Verarbeitungseinheiten auf, die das Eingangssignal redundant zueinander verarbeiten und logische Signalverknüpfungen vornehmen, um in Abhängigkeit davon das Ausgangssignal zu erzeugen.

In dieser Ausgestaltung werden zwei redundante Signalverarbeitungskanäle mit jeweils (zumindest) einer Verarbeitungseinheit bereitgestellt, um so entsprechende Sicherheitsnormen zu erfüllen. Es wird so eine mehrkanalige bzw. zweikanalige Sicherheitsschaltvorrichtung bereitgestellt. Dies ermöglicht es eine Sicherheitsschaltvorrichtung bereitzustellen, die zumindest die Kategorie 3 der erforderlichen Sicherheitsnorm erfüllt.

In einer weiteren Ausgestaltung ist das Netzteil zum Erzeugen mehrerer Betriebsspannungen für die fehlersichere Steuer/Auswerteeinheit ausgebildet. Insbesondere weist das Netzteil mehrere Spannungswandler auf, um die Eingangsspannung in mehrere Ausgangsspannungen jeweils eines definierten Ausgangsspannungswertes umzuwandeln, wobei jede Ausgangsspannung jeweils einer Betriebsspannung für die Steuer/Auswerteeinheit entspricht.

In dieser Ausgestaltung stellt das Netzteil mehrere Betriebsspannungen für die Steuer/Auswerteeinheit bereit. Insbesondere werden mehrere Spannungswandler verwendet, die aus derselben Eingangsspannung jeweils unterschiedliche Ausgangsspannungswerte erzeugen. Bei mehreren Spannungswandlern muss so nur eine gemeinsame Eingangsspannung abschaltbar sein, um die Sicherheit zu gewährleisten. Die Vorrichtung kann somit selbst bei Vorsehen mehrerer Betriebsspannungen kostengünstig realisiert werden.

In einer weiteren Ausgestaltung weist das Sicherheitsschaltgerät weiterhin einen Addierer zum Bereitstellen einer Summenspannung auf, die der Summe der mehreren Betriebsspannungen entspricht. Insbesondere ist die Summenspannung die momentan vorhandene Ausgangsspannung für den Vergleicher.

In dieser Ausgestaltung wird bei Verwendung mehrerer Betriebsspannungen eine einfache Spannungsüberwachung bereitgestellt. Insbesondere ist die Überwachung der Summenspannung einfacher als eine Überwachung jeder einzelnen Spannung. Die einzelnen Werte der Ausgangsspannung bzw. Betriebsspannung werden addiert und die Summe wird überwacht. Die Vorrichtung kann somit selbst bei Vorsehen mehrerer Betriebsspannungen kostengünstig realisiert werden.

In einer weiteren Ausgestaltung haben die zumindest zwei Verarbeitungseinheiten unterschiedliche Betriebsspannungen der von dem Netzteil erzeugten mehreren Betriebsspannungen.

In dieser Ausgestaltung können mehrere getrennte bzw. unterschiedliche Spannungsversorgungen bei einer mehrkanaligen Sicherheitsschaltvorrichtung (d.h. mit mehreren Signalverarbeitungskanälen) bereitgestellt werden. Dadurch, dass die Verarbeitungseinheiten unterschiedlicher Signalverarbeitungskanäle unterschiedliche Betriebsspannungen erhalten, ist der Weiterbetrieb der vom Fehler nicht betroffenen Verarbeitungseinheit bzw. des vom Fehler nicht betroffenen Signalverarbeitungskanals möglich. Die Sicherheit der Sicherheitsschaltvorrichtung wird so weiter erhöht.

In einer weiteren Ausgestaltung weist die fehlersichere Steuer/Auswerteeinheit einen Eingang zum Empfangen eines Statussignals auf, das von dem Fehlerdetektor bei Erkennen eines Fehlerzustands des Spannungswandlers erzeugt wird. Insbesondere kann die fehlersichere Steuer/Auswerteeinheit einen Speicher zum Speichern eines entsprechenden Fehlereintrags bei Empfang des Statussignals aufweisen.

Bei dieser Ausgestaltung kann die Ursache für den Fehler bzw. Ausfall der Sicherheitsschaltvorrichtung später ausgelesen bzw. überprüft werden. Es kann so ein Nullspannungssicheres Speichern von Versorgungsspannungsfehler-Meldungen bereitgestellt werden. Wenn der Fehlerdetektor einen Fehlerzustand erkannt hat bzw. die Spannungsüberwachung ausgelöst hat, gibt der Fehlerdetektor eine entsprechende Meldung in Form eines Statussignals an die Steuer/Auswerteeinheit (z.B. CPU oder Mikrokontroller) ab. Durch die Energie-Pufferung im Netzteil bleibt ausreichend Zeit, um einen entsprechenden Fehlereintrag in dem Speicher zu speichern, beispielsweise in einen Errorstack. Wenn der Fehlerzustand keine dauerhafte Zerstörung der Steuer/Auswerteeinheit zur Folge hatte, d.h. nur eine vorübergehende Störung war, oder wenn das Netzteil ausgetauscht werden kann, dann kann beispielsweise nach der Wiederinbetriebnahme der Vorrichtung die Ursache für den Ausfall der Sicherheitsschaltvorrichtung aus dem Speicher (z.B. Errorstack) ausgelesen werden. Dies erhöht die Benutzerfreundlichkeit der Vorrichtung und kann die Sicherheit weiter erhöhen.

In einer weiteren Ausgestaltung ist die Sicherheitsschaltvorrichtung, insbesondere der Fehlerdetektor und der Schalter, für eine maximal im Fehlerfall auftretende Überspannung ausgelegt. Beispielsweise kann die maximal im Fehlerfall auftretende Überspannung 60V oder 65 V sein. In dieser Ausgestaltung werden von außen auf die Sicherheitsschaltvorrichtung eingespeisten Überspannungen mit der maximal im Fehlerfall auftretende Überspannung angenommen. Es wird so ein Berührschutz bzw. eine Berührsicherheit der Sicherheitsschaltvorrichtung bereitgestellt. Die im Fehlerfall maximal auftretende Überspannung ist derart gewählt, dass ein Benutzer die Sicherheitsschaltvorrichtung bzw. das Netzteil ohne Verletzung oder Schädigung berühren kann (z.B. 65 Volt). Dies verringert das Verletzungsrisiko.

In einer weiteren Ausgestaltung weist das Netzteil an seinem Ausgang weiterhin einen Ausgangsfilter auf. Der Fehlerdetektor ist insbesondere vor dem Ausgangsfilter angeordnet. In anderen Worten ist insbesondere dem Fehlerdetektor (bzw. der Stelle an der die Ausgangsspannung gemessen wird) ein Ausgangsfilter nachgeschaltet. Somit ist die Spannungsüberwachung bzw. der Fehlerdetektor innerhalb des Netzteils und vor dem Ausgangsfilter angeordnet. Der Fehlerzustand bzw. Spannungsfehler wird somit an der nächsten Stelle zu seinem Entstehungsort (z.B. im Spannungswandler) erfasst. Dadurch ergibt sich eine kürzest mögliche Fehierreaktionszeit.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
Fig. 1 eine vereinfachte Darstellung eines Ausführungsbeispiels der Sicherheitsschaltvorrichtung,
Fig. 2 eine vereinfachte Darstellung zur Erläuterung eines ersten Ausführungsbeispiels des Netzteils der neuen Sicherheitsschaltvorrichtung, wobei hier kein Watchdog dargestellt ist,
Fig. 3 eine vereinfachte Darstellung zur Erläuterung eines zweiten Ausführungsbeispiels des Netzteils der neuen Sicherheitsschaltvorrichtung, wobei hier kein Watchdog dargestellt ist,
Fig. 4 ein Blockschaltbild eines ersten Implementierungsbeispiels des Ausführungsbeispiels der Fig. 3,
Fig. 5 ein Blockschaltbild eines zweiten Implementierungsbeispiels des Ausführungsbeispiels der Fig. 3,
Fig. 6 eine vereinfachte Darstellung eines Ausführungsbeispiels des Netzteils der neuen Sicherheitsschaltvorrichtung,
Fig. 7 ein Blockschaltbild eines Implementierungsbeispiels eines Watchdogs,
Fig. 8 eine vereinfachte Darstellung eines Teils der neuen Sicherheitsschaltvorrichtung mit einem Addierer,
Fig. 9 ein Blockschaltbild eines Implementierungsbeispiels eines Addierers, und
Fig. 10 ein Blockschaltbild eines Implementierungsbeispiels eines Setzsignal-Erzeugers.

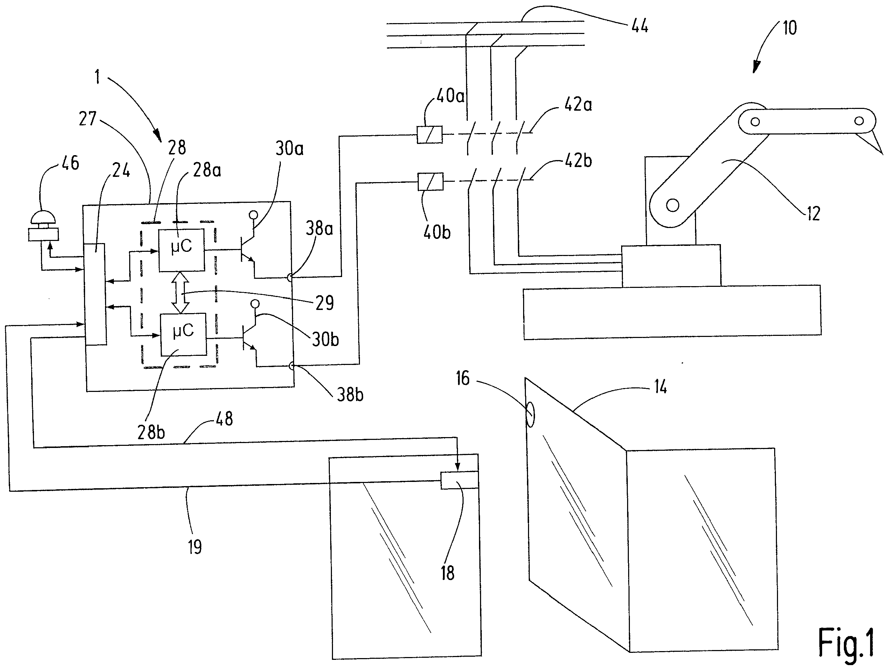

Fig. 1 zeigt eine vereinfachte Darstellung eines Ausführungsbeispiels der Sicherheitsschaltvorrichtung 1 zum fehlersicheren Ein- oder Ausschalten einer gefährlichen Anlage 10. In anderen Worten wird die Sicherheitsschaltvorrichtung 1 für Sicherheitsaufgaben verwendet. Die Anlage 10 beinhaltet hier beispielhaft einen Roboter 12, von dessen Bewegungen im Arbeitsbetrieb eine Gefahr für Personen ausgeht, die sich im Arbeitsbereich des Roboters 12 aufhalten. Aus diesem Grund ist der Arbeitsbereich des Roboters 12 mit einem Schutzzaun mit einer Schutztür 14 abgesichert. Die Schutztür 14 ermöglicht den Zugang in den Arbeitsbereich des Roboters 12, beispielsweise für Wartungsarbeiten oder für Einrichtarbeiten. Im normalen Arbeitsbetrieb darf der Roboter 12 jedoch nur arbeiten, wenn die Schutztür 14 geschlossen ist. Sobald die Schutztür 14 geöffnet wird, muss der Roboter 12 abgeschaltet werden oder auf andere Weise in einen sicheren Zustand gebracht werden.

Um den geschlossenen Zustand der Schutztür 14 zu detektieren, ist an der Schutztür 14 ein Schutztürschalter mit einem Türteil 16 und einem Rahmenteil 18 angebracht. Das Rahmenteil 18 erzeugt auf einer Leitung 19 ein Schutztürsignal, das über die Leitung 19 der neuen Sicherheitsschaltvorrichtung 1 zugeführt ist.

Die Sicherheitsschaltvorrichtung 1 weist mindestens einem Eingang zum Aufnehmen eines Eingangssignals auf, beispielsweise zumindest einen ersten Eingang zum Aufnehmen des über die Leitung 19 übertragenden Schutztürsignals. In diesem Ausführungsbeispiel besitzt die Sicherheitsschaltvorrichtung 1 einen E/A-Teil 24 mit einer Vielzahl von Eingängen und Ausgängen. Die Eingänge und Ausgänge sind in der Form von Anschlüssen (bzw. externen oder Geräteanschlüssen) ausgebildet. In einigen Ausführungsbeispielen sind die Anschlüsse Anschlussklemmen oder Feldklemmen, die an einer Gehäuseseite des Gehäuses 27 der Sicherheitsschaltvorrichtung 1 angeordnet sind. Beispielsweise kann es sich um Federzugklemmen oder um Schraubklemmen handeln. In anderen Ausführungsbeispielen können die Anschlüsse Stecker oder Buchsen sein, die mehrere Kontaktelemente (Pins) beinhalten, wobei jeweils ein Pin einen Anschluss bildet. Häufig werden M8-Buchsen mit fünf Kontaktpins für den Anschluss von Meldegeräten oder anderen Sensoren auf Feldebene verwendet. Dementsprechend können Ausführungsbeispiele der neuen Sicherheitsschaltvorrichtung 1 Feldgeräte sein oder umfassen, die außerhalb eines Schaltschranks in räumlicher Nähe zu dem Roboter 12 angeordnet sind.

Die Sicherheitsschaltvorrichtung 1 weist weiterhin eine fehlersicherere Steuer/Auswerteeinheit 28 auf. Die Steuer/Auswerteeinheit 28 verarbeitet das Eingangssignal, beispielsweise das über die Leitung 19 übertragenden Schutztürsignal, um in Abhängigkeit davon ein Ausgangssignal zum Ein- oder Ausschalten der gefährlichen Anlage 10 zu erzeugen. In diesem Ausführungsbeispiel besitzt die fehlersicherere Steuer/Auswerteeinheit 28 zwei Verarbeitungseinheiten 28a, 28b. Die Verarbeitungseinheiten 28a, 28b können beispielsweise in Form von Mikrokontrollern bereitgestellt werden. Die Verarbeitungseinheiten 28a, 28b sind hier jeweils mit dem E/A-Teil 24 verbunden. Die Verarbeitungseinheiten 28a, 28b verarbeiten das Eingangssignal redundant zueinander und nehmen logische Signalverknüpfungen vor (z.B. durch Vergleichen der Signale, was in Fig. 1 mit einem Pfeil 29 dargestellt ist), um in Abhängigkeit davon das Ausgangssignal zu erzeugen. Die Sicherheitsschaltvorrichtung 1 besitzt daher in diesem Ausführungsbeispiel zwei redundante Signalverarbeitungskanäle. Die Verarbeitungseinheiten können beispielsweise in Form von Mikrokontrollern bereitgestellt werden. Anstelle von zwei Mikrokontrollern können Mikroprozessoren, ASICs, FPGAs und/oder andere Signalverarbeitungsschaltkreise verwendet sein. Das Ausgangssignal wird verwendet, um ein Schaltelement zum Abschalten des Roboters 12 anzusteuern. Eine solche Sicherheitsschaltvorrichtung 1 kann daher zum fehlersicheren (FS) Abschalten der Anlage 10, hier des Roboters 12, verwendet werden.

In dem hier dargestellten Fall besitzt die Sicherheitsschaltvorrichtung 1 zwei redundante Schaltelemente 30a, 30b. Jedes dieser beiden Schaltelemente ist in der Lage, ein hohes Spannungspotential zu einem Ausgang oder Geräteanschluss 38a, 38b der Sicherheitsschaltvorrichtung 1 durchzuschalten, um einen Stromfluss zu einem Schütz 40a, 40b zu ermöglichen, oder diesen Stromfluss zu unterbrechen. Damit kann jedes der Schaltelemente 30 einen Aktor, wie einen Schütz oder ein Magnetventil, abschalten.

Die Schütze 40a, 40b besitzen jeweils Arbeitskontakte 42a, 42b. Die Arbeitskontakte 42a, 42b sind hier in Reihe zueinander in einen Stromversorgungspfad von einer Stromversorgung 44 zu dem Roboter 12 angeordnet. Sobald die Sicherheitsschaltvorrichtung 1 die Schütze 40a, 40b abschaltet, fallen die Kontakte 42 ab und die Stromversorgung für den Roboter 12 wird abgeschaltet. Den einschlägigen Fachleuten ist klar, dass eine solche "radikale" Abschaltung hier beispielhaft beschrieben ist. Abweichend hiervon können bei einer Sicherheitsanforderung lediglich Teile des Roboters 12 abgeschaltet werden, wie etwa die gefährlichen Antriebe, während andere Teile des Roboters 12 funktionsbereit bleiben. Auch ein verzögertes Abschalten ist denkbar, damit der Roboter 12 ggf. vor dem Abschalten der Antriebe kontrolliert abgebremst werden kann.

Die Sicherheitsschaltvorrichtung 1 steuert die Schaltelemente 30a, 30b in diesem Ausführungsbeispiel in Abhängigkeit von dem Signal des Schutztürschalters auf der Leitung 19 und in Abhängigkeit von einem weiteren Eingangssignal von einem Not-Aus-Taster 46 an. Auch der Not-Aus-Taster 46 ist über Leitungen mit Geräteanschlüssen der Sicherheitsschaltvorrichtung 1 verbunden. Insbesondere weist die Sicherheitsschaltvorrichtung einem zweiten Eingang zum Aufnehmen des Eingangssignals von dem Not-Aus-Taster 46. Bevorzugt kann jedes der Eingangssignale redundant anliegen bzw. es können jeweils zwei Eingangs- und Ausgangsleitungen oder Anschlüsse vorgesehen sein (in Fig. 1 nicht dargestellt). In dem in Fig. 1 gezeigten Beispiel können also für den Not-Aus-Taster 46 zwei Eingangsleitungen oder Eingänge vorgesehen sein, die jeweils ein Eingangssignal von dem Not-Aus- Taster 46 liefern. Ähnliches gilt für das Signal des Schutztürschalters.

In einigen Ausführungsbeispielen erzeugt die Sicherheitsschaltvorrichtung 1 Ausgangssignale, die den einzelnen Meldegeräten zugeführt sind. Beispielhaft ist ein solches Ausgangssignal über eine Leitung 48 zu dem Rahmenteil 18 des Schutztürschalters geführt. Das Rahmenteil 18 schleift das Ausgangssignal des Sicherheitsschaltgerätes 1 von der Leitung 48 auf die Leitung 19, wenn sich das Türteil 16 in der Nähe des Rahmenteils 18 befindet, das heißt wenn die Schutztür 14 geschlossen ist. Daher kann die Sicherheitsschaltvorrichtung 1 den Schutztürschalter mit Hilfe des Ausgangssignals auf der Leitung 48 und mit Hilfe des Eingangssignals auf der Leitung 19 überwachen. In vergleichbarer Weise überwacht die Sicherheitsschaltvorrichtung 1 hier den Not-Aus-Taster 46.

Abweichend von der Darstellung in Fig. 1 werden in der Praxis häufig zwei redundante Ausgangssignale der Sicherheitsschaltvorrichtung 1 verwendet, die jeweils über eine separate Signalleitung zu einem Meldegerät geführt sind und über dieses Meldegerät zurück zur Sicherheitsschaltvorrichtung 1 geschleift sind. Beispielhaft für eine solche Realisierung sei auf DE 10 2004 020 995 A1 verwiesen, die hinsichtlich der Details einer solchen redundanten Überwachung eines Meldegerätes durch Bezugnahme aufgenommen ist. Auch der Not-Aus-Taster 46 wird in der Praxis häufig mit redundanten Eingangs- und Ausgangsleitungen überwacht, wie oben erwähnt.

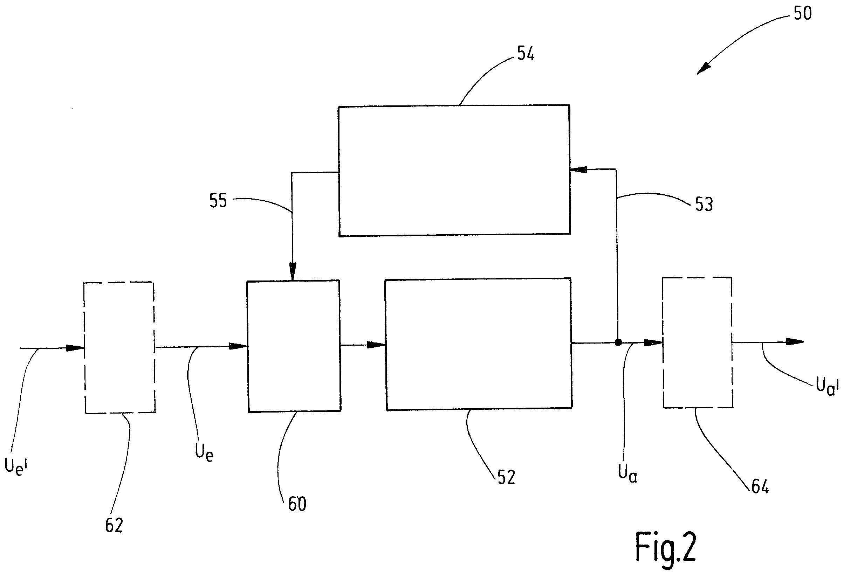

Die Sicherheitsschaltvorrichtung 1 besitzt ein Netzteil zum Bereitstellen zumindest einer Betriebsspannung für die Steuer/Auswerteeinheit 28. Fig. 2 zeigt eine vereinfachte Darstellung eines Netzteils 50. Das Netzteil 50 besitzt einen Spannungswandler 52 zum Umwandeln einer Eingangspannung Ue in eine der Betriebsspannung entsprechende Ausgangsspannung Ua eines definierten Ausgangsspannungswertes. Der Spannungswandler 52 ist insbesondere ein Gleichspannungswandler (DC-DC-Wandler), der eine Gleichspannung als Eingangsspannung Ue in eine Gleichspannung als Ausgangsspannung Ua umwandelt. Der Spannungswandler 52 kann beispielsweise ein Tiefsetzsteller (auch Abwärtswandler genannt) sein, bei dem der definierte Ausgangsspannungswert kleiner ist als der Spannungswert der Eingangsspannung. Der Spannungswandler kann beispielsweise ein Sperrwandler (auch Hoch-Tiefsetzsteller genannt) sein, der eine galvanische Trennung besitzt. Alternativ, kann der Spannungswandler auch keine galvanische Trennung aufweisen (z.B. Tiefsetzsteller ohne galvanische Trennung).

Das Netzteil 50 weist einen Fehlerdetektor 54 zum Erkennen eines Fehlerzustands des Spannungswandlers 52 auf. Der Fehlerdetektor 54 weist einen Vergleicher zum Vergleichen der momentan vorhandenen Ausgangsspannung Ua mit einer definierten Referenzspannung auf. Der Fehlerdetektor 54 bzw. dessen Eingang ist über eine elektrische Verbindung 53 mit der Ausgangsspannung Ua bzw. dem Ausgang des Spannungswandlers 52 verbunden. Der Fehlerdetektor 54 bzw. dessen Ausgang liefert bei Erkennen einer bestimmten Abweichung von der Referenzspannung ein Fehlerzustandssignal. Insbesondere kann der Fehlerdetektor 54 ein Fehlerzustandssignal liefern bei Erkennen einer bestimmten Überschreitung der Referenzspannung, d.h. bei Erkennen des Fehlerzustands. Der Fehlerzustand entspricht dann einer Überspannung der Ausgangsspannung Ua. Es wird so eine Überspannungsüberwachung bereitgestellt. Alternativ oder kumulativ kann der Fehlerdetektor 54 ein Fehlerzustandssignal liefern bei Erkennen einer bestimmten Unterschreitung der Referenzspannung. Der Fehlerzustand entspricht dann einer Unterspannung der Ausgangsspannung Ua. Es wird so eine Überspannungsüberwachung bereitgestellt bzw. eine Überspannungs- und Unterspannungs-überwachung.

Das Netzteil 50 besitzt weiterhin einen Schalter 60. Der Schalter 60 und der Fehlerdetektor 54 sind über eine elektrische Verbindung 55 miteinander verbunden. Bei Erkennen einer bestimmten Abweichung von der Referenzspannung, d.h. bei Erkennen des Fehlerzustands, liefert der Fehlerdetektor 54 das Fehlerzustandssignal über die elektrische Verbindung 55 an den Schalter 60. Der Schalter 60 schaltet bei Vorliegen des Fehlerzustandssignals die Eingangsspannung Ue des Spannungswandlers 52 ab.

Die Fehlerzustandserkennung und Abschaltung findet daher innerhalb des Netzteiles 50 statt. Bei Erkennen des Fehlerzustands (bzw. bei Vorliegen des Fehlerzustandssignals) schaltet das Netzteil 50 sich selbst ab. Die neue Sicherheitsschaltvorrichtung verwendet eine Überwachung der Ausgangsspannung Ua des Spannungswandlers 52, um im Fehlerfall bzw. bei Vorliegen des Fehlerzustandssignals (insbesondere durch Bauteildefekt/-ausfall im Netzteil) die Eingangsspannung Ue des Spannungswandlers 52 abzuschalten. Bezogen auf die Strom- bzw. Signalflussrichtung des Netzteils 50 (vom Eingang zum Ausgang) findet eine Abschaltung vor dem Fehlerdetektor 54, bzw. dem Punkt an dem die Spannung Ua überwacht wird, statt. Eine durch Netzteildefekte bzw. Spannungswandlerdefekte verursachte Gefahr wird direkt am Entstehungsort, d.h. dem Netzteil bzw. Spannungswandler, ausgeschaltet. Es wird so der den Fehlerzustand (insbesondere Überspannung oder Unterspannung) verursachende Spannungsschaltungsteil abgeschaltet. In anderen Worten wird die Fehlerzustandsursache beseitigt.

Optional kann das Netzteil 50 an seinem Eingang weiterhin einen Eingangsfilter 62 (in Fig. 2 gestrichelt dargestellt) aufweisen, der die Eingangsspannung Ue' in die Eingangsspannung Ue umwandelt bzw. filtert. Der Eingangsfilter 62 kann beispielsweise ein EMV-Filter oder ähnliches sein. Es sollte verstanden werden, dass die Eingangspannung Ue und Ue' miteinander austauschbar verwendet werden können. Optional kann das Netzteil 50 an seinem Ausgang weiterhin einen Ausgangsfilter 64 (in Fig. 2 gestrichelt dargestellt), insbesondere mit Puffer, sein, der die Ausgangsspannung Ua in eine Ausgangsspannung Ua' umwandelt bzw. filtert. Der Ausgangsfilter 64 kann beispielsweise ein Glättungsfilter sein. Es sollte verstanden werden, dass die Eingangspannung Ua und Ua' miteinander austauschbar verwendet werden können.

In dem in Fig. 2 gezeigten Netzteil ist der Fehlerdetektor 54 vor dem Ausgangsfilter 64 angeordnet, bezogen auf die Strom- bzw. Signalflussrichtung des Netzteils 50 (vom Eingang zum Ausgang). In anderen Worten ist dem Fehlerdetektor 54, insbesondere der Stelle an der die Ausgangsspannung Ua durch den Fhelerdetektor 54 bzw. Vergleicher 56 gemessen oder abgegriffen wird, der Ausgangsfilter 64 nachgeschaltet. Somit ist die Spannungsüberwachung bzw. der Fehlerdetektor 54 innerhalb des Netzteils 50 und vor dem Ausgangsfilter 64 angeordnet. Der Fehlerzustand bzw. Spannungsfehler wird somit an der nächsten Stelle zu seinem Entstehungsort, beispielsweise im Spannungswandler 52, erfasst.

Die Sicherheitsschaltvorrichtung, insbesondere der Fehlerdetektor 54 und der Schalter 60, kann bzw. können für eine maximal im Fehlerfall auftretende Überspannung ausgelegt sein. Beispielsweise kann die maximal im Fehlerfall auftretende Überspannung 60 V oder 65 V sein. Es wird so ein Berührschutz bzw. eine Berührsicherheit der Sicherheitsschaltvorrichtung bereitgestellt. Die im Fehlerfall maximal auftretende Überspannung ist derart gewählt, dass ein Benutzer die Sicherheitsschaltvorrichtung bzw. das Netzteil ohne Verletzung oder Schädigung berühren kann.

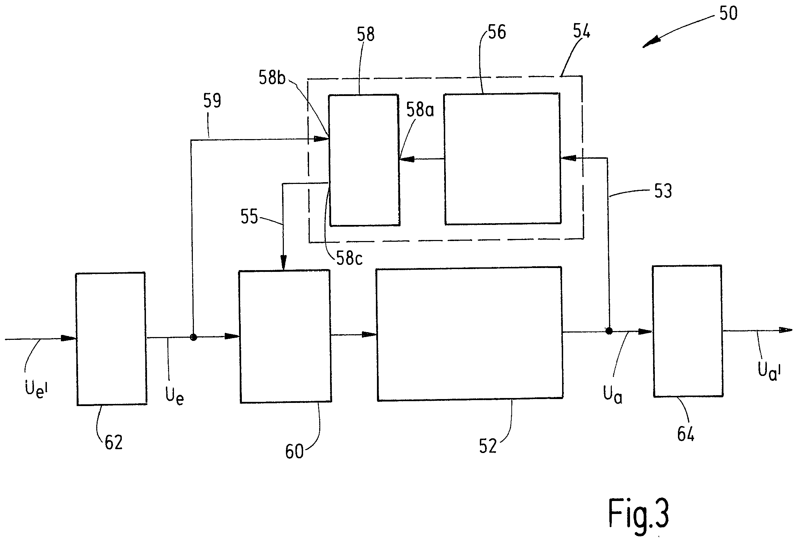

Das Netzteil der Fig. 3 basiert auf dem Netzteil der Fig. 2, so dass die Erläuterungen zu Fig. 2 ebenfalls auf Fig. 3 zutreffen. Im Netzteil der Fig. 3 weist der Fehlerdetektor 54 neben dem Vergleicher 56 weiterhin einen Speicher 58 zum Speichern des Fehlerzustandssignals auf. Der Vergleicher 56 bzw. dessen Eingang ist über die elektrische Verbindung 53 mit der Ausgangsspannung Ua verbunden. Der Speicher 58 besitzt einen mit dem Vergleicher 56 verbundenen ersten Eingang 58a und zumindest einen den Schalter 60 ansteuernden Ausgang 58c. Der Ausgang 58c ist über die elektrische Verbindung 55 mit dem Schalter 60 verbunden, um bei Erkennen des Fehlerzustands das Fehlerzustandssignal über die elektrische Verbindung 55 an den Schalter 60 zu liefern. Der Speicher 58 besitzt weiterhin einen zweiten Eingang 58b, der über eine elektrische Verbindung 59 mit der Eingangsspannung Ue verbunden ist. Bei erneutem Einschalten der Eingangsspannung Ue empfängt der Speicher 58 über die elektrische Verbindung 59 ein Signal zum Beenden des Speicherns des Fehlerzustandssignals, so dass ein Power-On-Reset durchgeführt wird. Der Speicher 58 kann beispielsweise in Form einer bistabilen Kippstufe, insbesondere RS-Flip-Flop, realisiert werden. Es ist jedoch auch jede andere geeignete Art des Fehlerzustandssignalspeicherns denkbar.

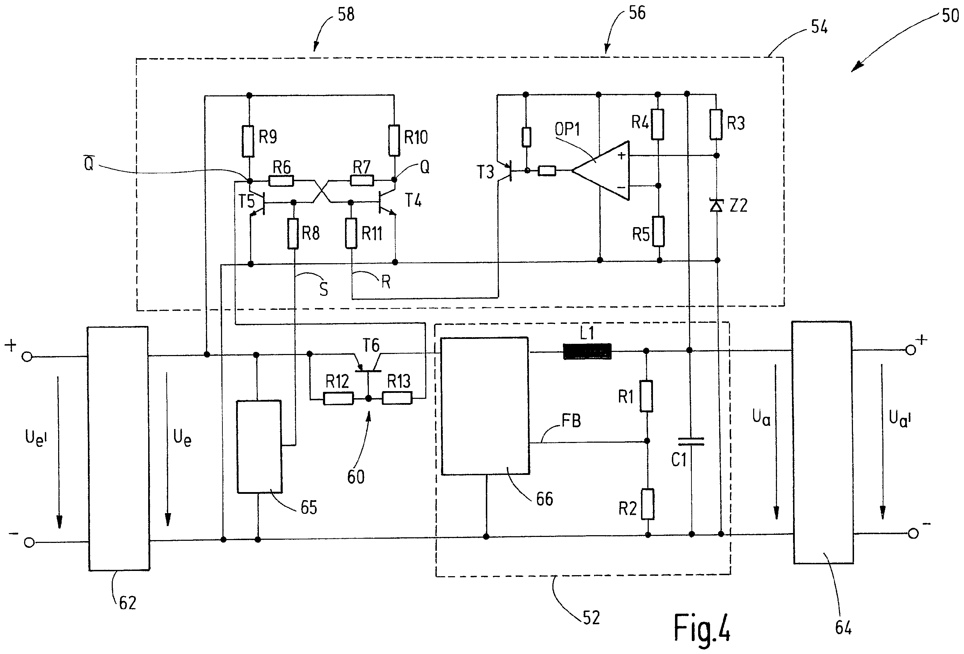

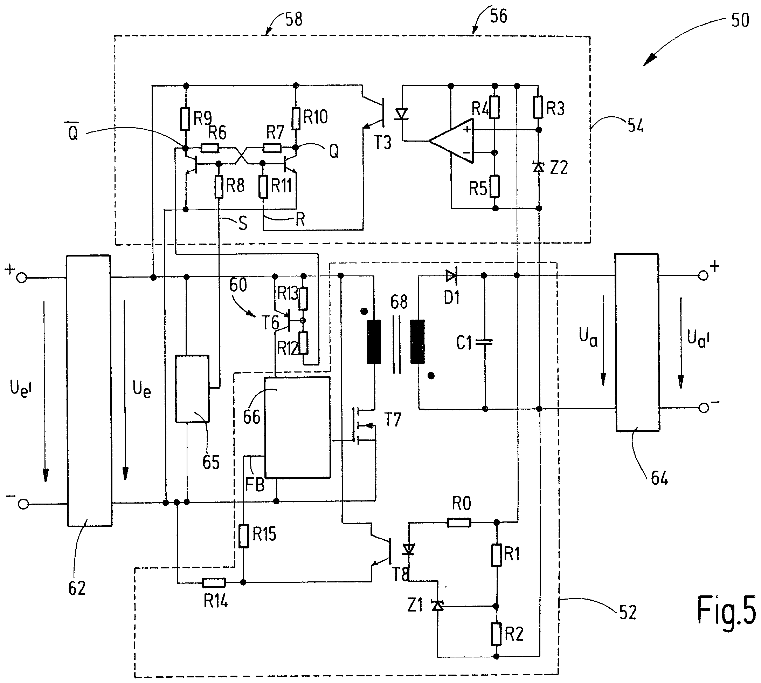

Fig. 4 zeigt ein Blockschaltbild eines ersten Implementierungsbeispiels des Netzteils der Fig. 3, und Fig. 5 zeigt ein Blockschaltbild eines zweiten Implementierungsbeispiels des Netzteils der Fig. 3. Es sollte jedoch verstanden werden, dass die Implementierungsbeispiele der Fig. 4 und der Fig. 5 rein beispielhaft sind und dass jede andere geeignete Art der Implementierung vorgesehen werden kann. In dem Implementierungsbeispiel der Fig. 4 oder Fig. 5 ist der Vergleicher 56 in Form eines Komparators realisiert. Der Komparator ist hier ein zu einem Komparator verschalteter Operationsverstärker OP1. Der Vergleicher 56 bzw. Komparator besitzt einen zwei Eingänge aufweisenden Operationsverstärker OP1, an dessen erstem Eingang ein Schwellwert-Schaltelement Z2 geschaltet ist und an dessen zweitem Eingang ein Spannungsteiler mit Spannungsteiler-Widerständen R4, R5 geschaltet ist. An dem ersten Eingang ist zusätzlich ein weiterer Widerstand R3 geschaltet, der mit dem Schwellwert-Schaltelement Z2 einen Spannungsteiler bildet. Das Schwellwert-Schaltelement Z2 liefert die Referenzspannung bzw. legt diese fest. Das Schwellwert-Schaltelement Z2 ist in diesem Beispiel eine Zener-Diode. Es sollte jedoch verstanden werden, dass auch jede andere geeignete Art von Schwellwert-Schaltelement vorgesehen werden kann.

In dem Implementierungsbeispiel der Fig. 4 oder Fig. 5 ist der Speicher 58 eine bistabile Kippstufe. Der erste Eingang 58a des Speichers 58 ist in diesem Beispiel ein Rücksetz-Eingang R der bistabilen Kippstufe und der zweite Eingang 58b des Speichers 58 ist ein Setz-Eingang S der bistabilen Kippstufe. Der den Schalter 60 ansteuernde Ausgang des Speichers ist hier ein Ausgang Q̅ der bistabilen Kippstufe. Der andere Ausgang Q der bistabilen Kippstufe ist in diesem Beispiel ungenutzt. Die Rücksetz-Eingang R der bistabilen Kippstufe ist mit dem Vergleicher 56 verbunden, genauer gesagt der Treiberstufe (mit Transistor T13) an dem Ausgang des Operationsverstärkers OP1. Der Rücksetz-Eingang R empfängt so von dem Vergleicher 56 bei Erkennen des Fehlerzustands ein Rücksetzsignal. Der Setz-Eingang S empfängt bei Einschalten der Eingangsspannung Ue ein Setzsignal, so dass die bistabile Kippstufe "kippt", um auf diese Weise das Power-On-Reset einzuleiten.

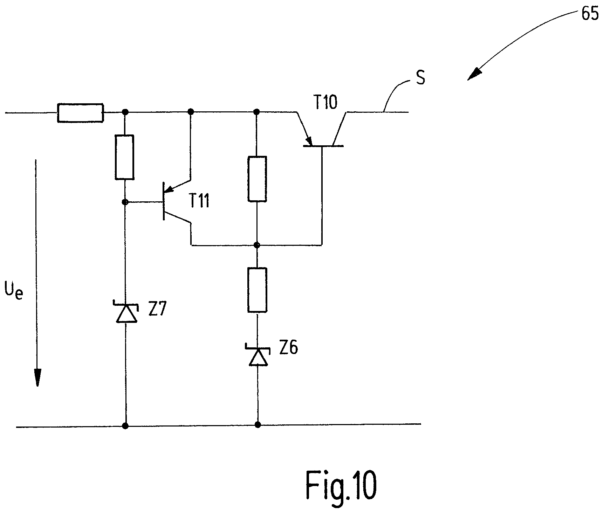

In einem Ausführungsbeispiel weist die Sicherheitsschaltvorrichtung einen Setzsignal-Erzeuger 65 auf, der in Abhängigkeit von der Eingangsspannung Ue das Setzsignal erzeugt. Beispielsweise kann der Setzsignal-Erzeuger 65 dazu ausgebildet sein das Setzsignal bei einem bestimmten, beispielsweise rampenförmigen, Anstieg der Eingangsspannung Ue zu erzeugen. Ein Implementierungsbeispiel des Setzsignal-Erzeugers 65 wird nachfolgend mit Bezug auf Fig. 10 erklärt werden.

Eine bistabile Kippstufe (auch Flipflop genannt) ist bekannterweise eine elektronische Schaltung, die zwei stabile Zustände einnehmen und damit eine Datenmenge von einem Bit über eine lange Zeit speichern kann. Die bistabile Kippstufe kann insbesondere ein RS-Flipflop sein, wie in dem Implementierungsbeispiel der Fig. 3 oder Fig. 4 dargestellt Die bistabile Kippstufe in Form eines RS-Flipflop hat folgende Pegeltabelle, wobei H (HIGH) für einen hohen Pegel und L (LOW) für einen niedrigen Pegel steht. Es sollte verstanden werden, dass insbesondere bei den Eingänge R und S der niedrige Pegel L auch "hochohmig" bedeuten kann, beispielsweise durch gesperrte Transistoren.

| **R** | **S** | **Q** | **Q̅** | **Zustand** |
|---|---|---|---|---|
| H | H | L | L | Verboten |
| H | L | L | H | Rücksetzen |
| L | H | H | L | Setzen |
| L | L | wie vorher | wie vorher | Speichern |

In dem Implementierungsbeispiel der Fig. 4 oder Fig. 5 ist eine Überspannungsüberwachung verwirklicht. Es wird angenommen, dass, wenn kein Fehlerzustand vorliegt, die Ausgangsspannung Ua dem definierten Ausgangsspannungswert entspricht, und dass bei Vorliegen eines Fehlerzustands die Ausgangspannung Ua höher ist als der definiert Ausgangsspannungswert. Somit entspricht der Fehlerzustand einer Überspannung der Ausgangsspannung Ua. Das heißt, der Fehlerzustandsdetektor 54 liefert das Fehlerzustandssignal bei Erkennen einer bestimmten Überschreitung der Referenzspannung, die hier durch das Schwellwert-Schaltelement bzw. die Zener-Diode Z2 festgelegt ist. Die Zener-Diode ist hier derart gewählt, dass deren Durchbruchspannung kleiner ist als der definierte Ausgangsspannungswert der Ausgangspannung Ua.

Liegt kein Fehlerzustand vor, dann ist die Ausgangspannung Ua größer als die Durchbruchspannung und an der Zener-Diode Z2 fällt die Durchbruchspannung als Referenzspannung ab. Am nichtinvertierenden Eingang des Operationsverstärkers OP1 liegt dann eine größere Spannung an als am invertierenden Eingang. In anderen Worten liegt am nichtinvertierenden Eingang eine größere Spannung an als die Spannung über dem Widerstand R5, d.h. am invertierenden Eingang, aufgrund des Spannungsteilers R4, R5. Die Spannung zwischen nichtinvertierendem und invertierendem Eingang des Operationsverstärkers OP1 ist somit positiv. Dementsprechend liegt am Ausgang des Operationsverstärkers OP1 ein hoher Pegel (H) an. Dadurch sperrt der Transistor bzw. Optokoppler-Ausgang T3 der Treiberstufe am Ausgang des Operationsverstärkers OP1. Der erste npn Transistor T4 der bistabilen Kippstufe 58 sperrt und der zweite npn Transistor T5 der bistabilen Kippstufe 58 leitet und zieht den Ausgang Q̅ auf einen niedrigen Pegel (L), der den pnp Transistor T6 des Schalters 60 leiten lässt. Somit liegt im Nicht-Fehler-Fall immer eine Eingangsspannung Ue am Spannungswandler 52 an.

Bei Eintritt des Fehlerzustands bzw. Fehler-Falls durch eine Überspannung bei Ua, steigt die (über den Spannungsteiler R4, R5 angepasste) Spannung über dem Widerstand R5 über die Durchbruchspannung der Zener-Diode Z2. Am nichtinvertierenden Eingang des OP1 liegt dann eine kleinere Spannung an als die Spannung am invertierenden Eingang. Die Spannung zwischen nichtinvertierendem und invertierendem Eingang des Operationsverstärkers OP1 wird somit negativ. Dadurch liegt am Ausgang des Operationsverstärkers OP1 ein niedriger Pegel (L) an. Dies führt dazu, dass der Transistor bzw. Optokoppler-Ausgang T3 der Treiberstufe am Ausgang des OP1 leitet. Der Rücksetz-Eingang R ist dadurch aktiv. Die Spannung, die an den ersten npn Transistor T4 angelegt wird bewirkt das Leiten von Transistor T4 und zieht den Ausgang Q auf einen niedrigen Pegel (L) und den Ausgang Q̅ auf hohen Pegel (H), der den pnp Transistor T6 des Schalters 60 sperrt. Somit liegt bei Vorliegen des Fehlerzustands bzw. Fehler-Falls keine Eingangsspannung Ue am Spannungswandler 52 an.

Solange bei Vorliegen des Fehlerzustands der Rücksetz-Eingang R auf einem niedrigeren Pegel (L) bzw. hochohmig ist und auch der Setz-Eingang S auf einem niedrigen Pegel (L) bzw. hochohmig ist, ändert sich nichts an den am Ausgang Q und Ausgang Q̅ anliegenden Pegeln. Die bistabile Kippstufe behält den angenommenen Zustand bei und dient daher als Speichervorrichtung zum Speichern des Fehlerzustands. Erst wenn die Eingangsspannung Ue wieder eingeschaltet wird, wird in dem Setzsignal-Erzeuger 65 ein hoher Pegel (H) erzeugt und auf den Setz-Eingang S gegeben. So kommt der Punkt Q auf einen niedrigeren Pegel (L). Das heißt die bistabile Kippstufe "kippt" in diesem Fall. Dadurch leitet auch wieder der Transistor T6 des Schalters 60.

Rein beispielhaft ist in Fig. 10 ein Blockschaltbild eines Implementierungsbeispiels eines Setzsignal-Erzeugers 65 gezeigt. Es sollte jedoch verstanden werden, dass das Implementierungsbeispiel der Fig. 10 rein beispielhaft ist und dass jede andere geeignete Art der Implementierung vorgesehen werden kann. Der Setzsignal Erzeuger 65 der Fig. 10 umfasst zwei (pnp) Transistoren T10, T11 und zwei Zener-Dioden Z6, Z7. Die Zener-Dioden Z6 und Z7 werden hier in Sperrrichtung betrieben. Wenn die Eingangsspannung Ue kleiner als die Durchbruchsspannung der Zener-Dioden Z6, Z7 ist, sperren die Zener-Dioden Z6, Z7. Bei Überschreiten der Durchbruchsspannung werden die Zener-Dioden Z6, Z7 in Sperrrichtung leitend und halten die Durchbruch- oder Zener-Dioden-Spannung fast konstant. Die Differenzspannung zwischen der Durchbruchspannung und der angelegten Spannung bzw. die Eingangsspannung Ue fällt an den vorgeschalteten Widerständen ab. Rein beispielhaft kann angenommen, dass bei einer Emitter-Basisspannung von ca. 1 V die Transistoren T10, T11 leitend werden.

Wegen der Kapazitäten (z.B. im Eingangsfilter 62) und dem begrenzten Eingangsstrom, steigt die Eingangsspannung Ue nach Power-On rampenförmig an. Solange die Eingangsspannung Ue kleiner als die Durchbruchspannung (z.B. 8V) der Zener-Diode Z6 ist, sind alle Strompfade in der obigen Schaltung stromlos. Das Setzsignal S ist dann auf einem niedrigen Pegel (L) bzw. hochohmig. Ab einer Eingangsspannung Ue etwas oberhalb der Durchbruchspannung der Zener-Diode Z6 (z.B. ab etwa 9 V bei Durchbruchspannung 8V) bzw. bei einer bestimmten Emitter-Basis-Spannung (z.B. 1V) leitet der Transistor T10. Das Setzsignal S nimmt dann die Eingangsspannung Ue an bzw. ist auf einem hohen Pegel (H). Ab einer Eingangsspannung Ue etwas oberhalb der Durchbruchspannung der Zener-Diode Z7 (z.B. ab etwa 14 V bei Durchbruchspannung 13V) bzw. bei einer bestimmten Emitter-Basis-Spannung (z.B. 1V) leitet der Transistor T11. Dadurch wird die Emitter-Basis-Spannung des Transistors T10 kurzgeschlossen und der Transistor T10 in den gesperrten Zustand zurückgesetzt. Das Setzsignal S ist daher dann wieder auf einem niedrigen Pegel (L) bzw. hochohmig. Durch das so erzeugte Setzsignal S, auch Setzimpuls genannt, wird an der bistabilen Kippstufe bzw. am RS-Flipflop der Ausgang Q̅ auf einen niedrigen Pegel (L) bzw. Massepotential gesetzt. Dadurch wird der Transistor T6 des Schalters 60 leitend und der Schalter 60 somit eingeschaltet. Das Setzsignal S wird hier also bei einem bestimmten (rampenförmigen) Anstieg der Eingangsspannung erzeugt.

In dem Implementierungsbeispiel der Fig. 4 ist der Spannungswandler ein Tiefsetzsteller ohne galvanische Trennung. In dem Implementierungsbeispiel der Fig. 5 ist der Spannungswandler ein Sperrwandler (bzw. Hoch-Tiefsetzsteller), der eine galvanische Trennung in Form eines Transformators 68 besitzt. In dem Implementierungsbeispiel der Fig. 4 oder der Fig. 5 ist der Spannungswandler 52 daher in Form eines gebräuchlichen Spannungswandlers implementiert, so dass auf eine detaillierte Erläuterung des Aufbaus des Spannungswandlers an dieser Stelle verzichtet wird. Es ist jedoch zu bemerken, dass in dem Implementierungsbeispiel der Fig. 4 oder der Fig. 5 der Spannungswandler 52 einen Schaltregler 66 zur Regelung eines Stromflusses durch den Spannungswandler 52 besitzt, um die Ausgangsspannung Ua auf dem definierten Ausgangsspannungswert zu halten.

In dem Implementierungsbeispiel der Fig. 4 ist der Schalter 60 im Strompfad des Eingangs des Spannungswandlers 52 angeordnet, so dass der Schalter 60 bei Vorliegen des Fehlerzustandssignals die Stromzufuhr zu dem Eingang des Spannungswandlers 52 unterbricht. Es wird so eine direkte Abschaltung der Eingangsspannung Ue bereitgestellt. Wie oben erwähnt ist in dem Implementierungsbeispiel der Fig. 4 der Spannungswandler ein Tiefsetzsteller ohne galvanische Trennung. In dem Beispiel der Fig. 4 kann eine Überspannung der Ausgangsspannung Ua beispielsweise durch Defekte im Schaltregler 66 oder der Spannungsteiler-Widerstände R1, R2 verursacht werden. Ausfälle der anderen Bauteile können im Regelfall keine Überspannung der Ausgangsspannung Ua bzw. des Netzteils 50 erzeugen. Bei erkanntem Fehlerzustand, bzw. Überspannung der Ausgangsspannung Ua, wird die Eingangsspannung Ue vor dem Schaltregler 66 durch den Schalter 60 bzw. den Transistor T6 abgeschaltet. Damit kann der Spannungswandler 52 bzw. Tiefsetzsteller keinen Strom mehr an die Speicherdrossel L1 liefern und die Ausgangsspannung Ua wird ausgeschaltet. Die Eingangsspannung Ue bleibt abgeschaltet auch wenn die Ausgangsspannung Ua nach der erkannten Überspannung ausgeschaltet ist. Das wird durch den zuvor beschriebenen Speicher 58 in Form der bistabilen Kippstufe hinter dem Vergleicher 56 vorgenommen. Die Eingangsspannung des Spannungswandlers 52 bzw. Tiefsetzstellers wird erst nach erneutem Einschalten der Eingangsspannung Ue versucht wieder einzuschalten.

In dem Implementierungsbeispiel der Fig. 5 besitzt der Schaltregler 66 einen Eingang 67 für eine Schaltreglerversorgungsspannung aufweist, und wobei der Schalter 60 im Strompfad des Eingangs 67 für die Schaltreglerversorgungsspannung angeordnet ist, so dass der Schalter 60 bei Vorliegen des Fehlerzustandssignals die Stromzufuhr zu dem Eingang 67 des Schaltreglers 66 unterbricht. Wie oben erwähnt ist in dem Implementierungsbeispiel der Fig. 5 der Spannungswandler ein Sperrwandler (bzw. Hoch-Tiefsetzsteller), der eine galvanische Trennung in Form eines Transformators 68 besitzt. In dem Beispiel der Fig. 5 kann eine Überspannung der Ausgangsspannung Ua beispielsweise durch Defekte im Schaltregler 66 oder des einstellbaren Zener-Shunt-Reglers Z1 oder der Spannungsteiler-Widerstände R1, R2 verursacht werden. Ausfälle der anderen Bauteile können im Regelfall entweder ausgeschlossen werden oder führen zu einem ungefährlichen Zustand des Netzteils. Fällt beispielsweise der Feldeffekttransistor (FET) T7 aus, der den Primärstrom durch den Transformator 68 ein- und ausschaltet, kann keine Wechselspannung mehr erzeugt werden und deshalb auch keine Spannung am Ausgang des Transformators 68 entstehen. Bei erkanntem Fehlerzustand, bzw. Überspannung der Ausgangsspannung Ua, wird die Eingangsspannung Ue vor dem Schaltregler 66 durch den Schalter 60 bzw. den Transistor T6 abgeschaltet. Damit kann der FET T7 des Spannungswandlers 52 bzw. Sperrwandlers nicht mehr angesteuert werden und die Ausgangsspannung Ua wird ausgeschaltet Die Eingangsspannung Ue bleibt abgeschaltet auch wenn die Ausgangsspannung Ua nach der erkannten Überspannung ausgeschaltet ist. Das wird durch den zuvor beschriebenen Speicher 58 in Form der bistabilen Kippstufe hinter dem Vergleicher 56 vorgenommen. Die Eingangsspannung des Spannungswandlers 52 wird erst nach erneutem Einschalten der Eingangsspannung Ue versucht wieder einzuschalten.

Es sollte verstanden werden, dass obwohl vorhergehend mit Bezug auf das Implementierungsbeispiel der Fig. 4 oder der Fig. 5 analoge Schaltungstechnik beschrieben wurde, die gleichen Funktionen ebenfalls mit digitaler Schaltungstechnik realisiert werden können.

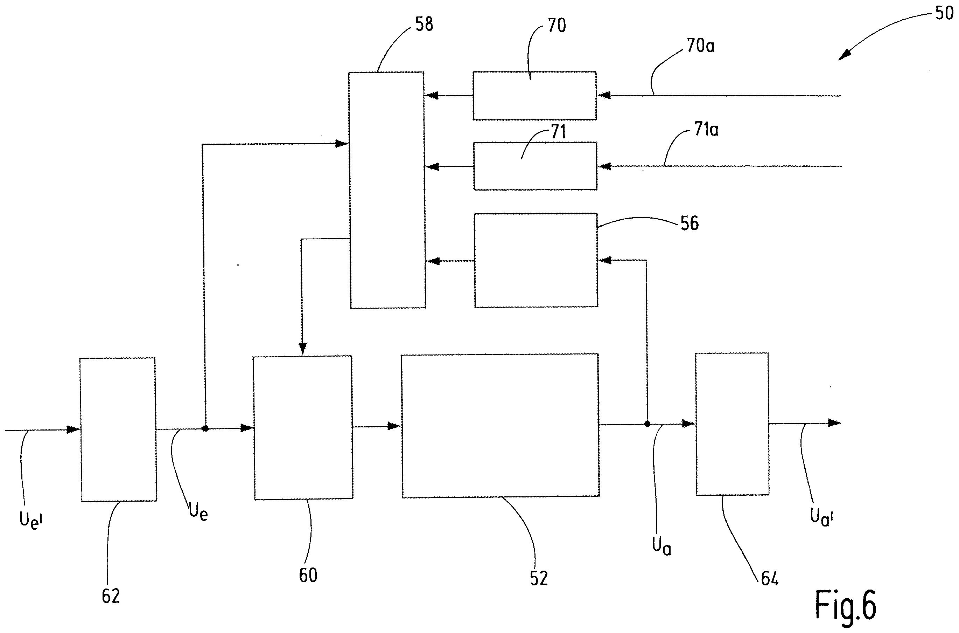

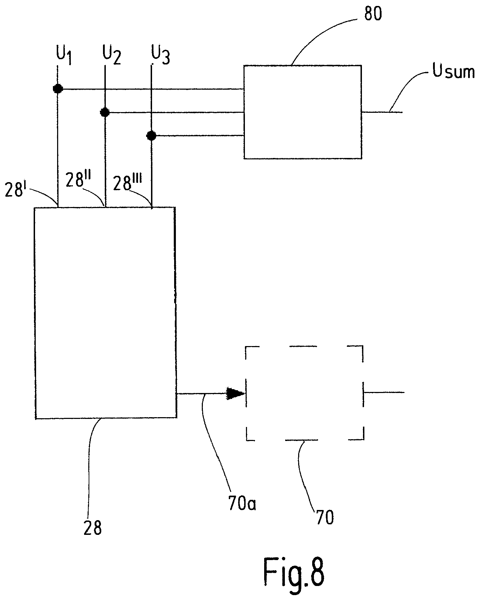

Fig. 6 zeigt eine vereinfachte Darstellung eines Ausführungsbeispiels des Netzteils 50 der neuen Sicherheitsschaltvorrichtung 1. Das Ausführungsbeispiel der Fig. 6 basiert auf dem Netzteil der Fig. 3, so dass die Erläuterungen zu Fig. 2 und Fig. 3 ebenfalls auf Fig. 6 zutreffen. In diesem Ausführungsbeispiel der Fig. 6 weist die Sicherheitsschaltvorrichtung 1 weiterhin zumindest einen Watchdog auf. Genauer gesagt sind in diesem Ausführungsbeispiel ein erster Watchdog 70 und ein zweiter Watchdog 71 vorgesehen. Der erste und zweite Watchdog 70, 71 ist jeweils über eine elektrische Verbindung 70a, 71a mit der fehlersicheren Steuer/Auswerteeinheit 28 (in Fig. 6 nicht dargestellt) verbunden. In dem Ausführungsbeispiel der Fig. 6 ist der Watchdog 70, 71 jeweils eine separate Komponente (außerhalb der Steuer/Auswerteeinheit) mit Kommunikation zur Steuer/Auswerteeinheit über die elektrische Verbindung 70a, 71a. Beispielsweise kann der erste Watchdog 70 mit einer ersten Verarbeitungseinheit 28a und der zweite Watchdog mit einer zweiten Verarbeitungseinheit 28b der Steuer/Auswerteeinheit 28 verbunden sein, wie beispielsweise die zuvor beschriebenen Verarbeitungseinheiten 28a, 28b zweier unterschiedlicher, redundanter Signalverarbeitungskanäle. Der erste und zweite Watchdog 70, 71 liefert jeweils bei Erkennen eines Fehlerzustands der Steuer/Auswerteeinheit 28 ein Fehlerzustandssignal an den Schalter 60, um die Eingangsspannung Ue des Spannungswandlers 52 abzuschalten. Es wird so eine zusätzliche Fehlerüberwachung der Steuer/Auswerteeinheit 28 in Form eines Watchdogs 70, 71 bereitgestellt (z.B. gegen einen Komplettausfall der Vorrichtung durch Softwareversagen). Der Watchdog 70, 71 spricht bei Erkennen des Fehlerzustands der überwachten Steuer/Auswerteeinheit 28 an und führt nach dem Ansprechen ebenfalls
zum Abschalten der Eingangsspannung Ue. Der Watchdog 70, 71 der Fig. 8 kann beispielsweise ein Hardware-Watchdog (HW-Watchdog) sein.

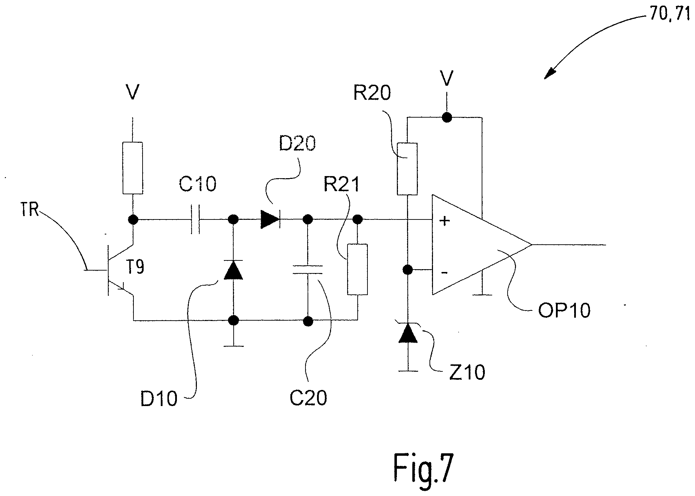

Rein beispielhaft ist in Fig. 7 ein Blockschaltbild eines Implementierungsbeispiels eines Watchdogs in Form eines HW-Watchdogs gezeigt. Es sollte jedoch verstanden werden, dass das Implementierungsbeispiel der Fig. 7 rein beispielhaft ist und dass jede andere geeignete Art der Implementierung vorgesehen werden kann. In dem Implementierungsbeispiel der Fig. 7 weist der Watchdog einen Operationsverstärker OP10 sowie vorgeschaltete Kondensatoren C10 und C20 und einen Transistor T9 auf. Der Transistor T9 befindet sich am Eingang des Watchdogs und der Operationsverstärker OP10 befindet sich am Ausgang des Watchdogs. Ein kurzer Trigger-Impuls TR von der Steuer/Auswerteeinheit 28 auf den Transistor T9 entlädt den Kondensator C10. Nach Beendigung des Trigger-Vorgangs lädt sich die Reihenschaltung der beiden Kondensatoren C10 und C20 auf die Versorgungsspannung V auf. Die Kapazität des Kondensators C10 ist sehr viel größer als die Kapazität des Kondensators C20. Nach dem Gesetz für kapazitive Spannungsteiler, liegt nach Beendigung des Ladevorgangs am sehr viel kleineren Kondensator C20 fast die gesamte Versorgungsspannung V an. Der Kondensator C20 entlädt sich jetzt über den Widerstand R21. Dabei sperrt die Diode D20.
Der hochohmige Widerstand R21 bewirkt eine langsame Entladung des Kondensators C20. Wenn der Kondensator C20 auf eine Spannung entladen ist, die dem von der Zener-Diode Z10 bestimmten Schwellwert entspricht, ändert der Operationsverstärker OP10 seinen Ausgangszustand und schaltet auf einen niedrigen Pegel (L). Der Watchdog spricht damit an und erkennt den Fehlerzustand. Der Watchdog liefert dann also das Fehlerzustandssignal. Im Nicht-Fehler-Fall bzw. fehlerfreien Betrieb wird das Ansprechen des Watchdogs durch rechtzeitiges Triggern der Transistorstufe verhindert.

In einem weiteren Ausführungsbeispiel (nicht gezeigt) der Sicherheitsschaltvorrichtung 1 weist die fehlersichere Steuer/Auswerteeinheit 28 einen Eingang zum Empfangen eines Statussignals auf, das von dem Fehlerdetektor 54 bei Erkennen eines Fehlerzustandes des Spannungswandlers 52 erzeugt wird. Die fehlersichere Steuer/Auswerteeinheit 28 besitzt weiterhin einen Speicher zum Speichern eines entsprechenden Fehlereintrags bei Empfang des Statussignals.

Vorhergehend wurde das Netzteil 50 derart beschreiben, dass es eine Ausgangsspannung Ua bzw. Betriebsspannung bereitstellt. Das Netzteil 50 kann jedoch auch zum Bereitstellen mehrerer Betriebsspannungen geeignet sein. Fig. 8 zeigt eine vereinfachte Darstellung eines Teils eines Ausführungsbeispiels der neuen Sicherheitsschaltvorrichtung 1. In diesem Ausführungsbeispiel ist das Netzteil 50 zum Erzeugen mehrerer Betriebsspannungen für die fehlersichere Steuer/Auswerteeinheit 28 ausgebildet. Das Netzteil 50 besitzt daher mehrere Spannungswandler (in Fig. 8 nicht gezeigt), um die Eingangspannung Ue in mehrere Ausgangsspannungen U1, U2, U3 jeweils eines definierten Ausgangsspannungswertes umzuwandeln. Das heißt jeder Spannungswandler wandelt die eine Eingangspannung Ue in eine bestimmte Ausgangsspannung um. Jede Ausgangsspannung U1, U2, U3 entspricht jeweils einer Betriebsspannung für die Steuer/Auswerteeinheit 28. Jede Ausgangsspannung U1, U2, U3 bzw. Betriebsspannung wird über jeweils eine entsprechende elektrische Verbindung jeweils einem entsprechenden Versorgungsspannungseingang 28', 28", 28"' der Steuer/Auswerteeinheit 28 zugeführt.

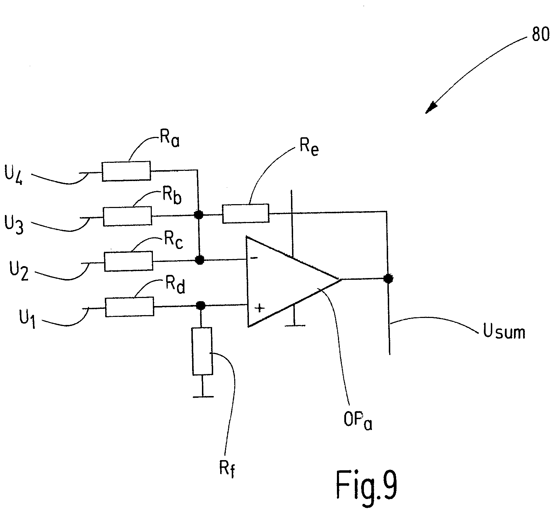

Die Sicherheitsschaltvorrichtung 1 besitzt weiterhin einen Addierer 80 zum Bereitstellen einer Summenspannung Usum, die der Summe der mehreren Betriebsspannungen U1, U2, U3 entspricht. Die Summenspannung Usum ist hier die momentan vorhandene Ausgangsspannung Ua für den Vergleicher 56. Die Summenspannung Usum wird also dem Fehlerdetektor 54 zugeführt. Somit wird die Summenspannung Usum überwacht, insbesondere auf Überspannung oder Unterspannung. Bei mehreren Spannungswandlern muss so nur eine gemeinsame Eingangsspannung abschaltbar sein, um die Sicherheit zu gewährleisten. Rein beispielhaft ist in Fig. 9 ein Blockschaltbild eines Implementierungsbeispiels eines Addierers 80 gezeigt. Der Addierer 80 in Fig. 9 ist ein zu enem Addierer verschalteter Operationsverstärker OPa. Obwohl in Fig. 8 bzw. Fig. 9 drei bzw. vier Ausgangsspannungen dargestellt sind, sollte verstanden werden, dass jede andere beliebige Anzahl von Spannungen addiert werden kann.

Wenn die Steuer/Auswerteeinheit 28 zumindest zwei Verarbeitungseinheiten 28a, 28b aufweist, dann können die zumindest zwei Verarbeitungseinheiten 28a, 28b unterschiedliche Betriebsspannungen der von dem Netzteil 50 erzeugten mehreren Betriebsspannungen haben. Es können mehrere getrennte bzw. unterschiedliche Spannungsversorgungen bei einer mehrkanaligen Sicherheitsschaltvorrichtung (d.h. mit mehreren Signalverarbeitungskanälen) bereitgestellt werden. Dadurch, dass die Verarbeitungseinheiten unterschiedlicher Signalverarbeitungskanäle unterschiedliche Betriebsspannungen erhalten, ist der Weiterbetrieb der vom Fehler nicht betroffenen Verarbeitungseinheit bzw. Signalverarbeitungskanals möglich. Die Sicherheit der Sicherheitsschaltvorrichtung wird so weiter erhöht. Alternativ, können die zumindest zwei Verarbeitungseinheiten 28a, 28b die gleiche Betriebsspannung oder Betriebsspannungen haben. Dies ermöglicht eine einfachere und weniger aufwendige Implementierung.

Optional kann in dem Beispiel der Fig. 8 natürlich auch ein zuvor beschriebener Watchdog 70, 71 (in Fig. 8 gestrichelt dargestellt) verwendet werden. Der Watchdog 70 ist über eine elektrische Verbindung 70a mit der Steuer/Auswerteeinheit 28 verbunden und kommuniziert so mit der Steuer/Auswerteeinheit. Der Watchdog 70 liefert bei Erkennen eines Fehlerzustands der Steuer/Auswerteeinheit 28 ein Fehlerzustandssignal an den Schalter 60 (in Fig. 8 nicht dargestellt), um die Eingangsspannung Ue des Spannungswandlers 52 abzuschalten, wie zuvor beschrieben.

Abschließend soll nun allgemein und beispielhaft eine Risikobetrachtung der neuen Sicherheitsschaltvorrichtung durchgeführt werden. Einige Bauteile im Spannungswandler, beispielsweise die Bauteile für die Regelung der Ausgangsspannung Ua (z.B. Bauteile des Schaltreglers), können bei ihrem Ausfall Überspannungen verursachen. Diese Bauteilausfall-Wahrscheinlichkeiten erhöhen das Gefahrenrisiko. Die Ausfallraten der risikoerhöhenden Bauteile können zusammengezählt werden und beziffern das Risiko für Gefahren durch Überspannungen. Der Wert soll mit der Variablen Ra bezeichnet werden. Zur Kompensation dieses Risikos werden die Maßnahmen zur Überwachung der Ausgangsspannung des Netzteils und dem Abschalten der Eingangsspannung in das sichere Netzteil integriert. Die Ausfallraten aller Bauteile, die für die Maßnahmen zur Beherrschung des Überspannungsrisikos benötigt werden, können gleichfalls zusammengezählt werden und beziffern das Risiko dafür, dass die Maßnahmen zur Beherrschung des Überspannungsrisikos nicht funktionieren. Dieser Wert soll mit der Variablen Rb bezeichnet werden. Die Gefahr durch Überspannungen tritt mit der Wahrscheinlichkeit Ra auf. Sie wird beherrscht mit Maßnahmen, die mit der Wahrscheinlichkeit Rb nicht funktionieren. Wenn beide Wahrscheinlichkeiten Ra sowie Rb eintreffen, ist die Gefahr durch Überspannungen eingetreten und nicht beherrschbar. Diese Wahrscheinlichkeit entspricht Rc = Ra · Rb. Wenn zwei kleine Wahrscheinlichkeiten multipliziert werden, ist das Ergebnis üblicherweise eine vernachlässigbar kleine Wahrscheinlichkeit. Die Gesamtwahrscheinlichkeit für das gefährliche Versagen des Sicherheitsgerätes muss unter einem akzeptablen Wert liegen, der das verbleibende Restrisiko angibt. Werte für das zulässige Restrisiko können für unterschiedliche Sicherheitskategorien aus den anzuwendenden Normen entnommen werden. Für die Wahrscheinlichkeit eines gefährlichen Ausfalls durch Überspannungen wird von der zulässigen Gesamtwahrscheinlichkeit ein Teil (z.B. 1 %) als Grenzwert angesetzt.

## Patentansprüche

1. Sicherheitsschaltvorrichtung (1) zum fehlersicheren Ein- oder Ausschalten einer gefährlichen Anlage (10), mit einem Eingang zum Aufnehmen eines Eingangssignals, mit einer fehlersicherere Steuer/Auswerteeinheit (28), die das Eingangssignal verarbeitet, um in Abhängigkeit davon ein Ausgangssignal zum Ein- oder Ausschalten der gefährlichen Anlage (10) zu erzeugen, und mit einem Netzteil (50) zum Bereitstellen zumindest einer Betriebsspannung für die Steuer/Auswerteeinheit (28), wobei das Netzteil (50) einen Spannungswandler (52) zum Umwandeln einer Eingangspannung (Ue) in eine der Betriebsspannung entsprechende Ausgangsspannung (Ua) eines definierten Ausgangsspannungswertes aufweist, **gekennzeichnet dadurch, dass** das Netzteil (50) einen Fehlerdetektor (54) zum Erkennen eines Fehlerzustands des Spannungswandlers (52) aufweist, wobei der Fehlerdetektor (54) einen Vergleicher (56) zum Vergleichen der momentan vorhandenen Ausgangsspannung (Ua) mit einer definierten Referenzspannung aufweist, wobei der Fehlerdetektor (54) ein Fehlerzustandssignal liefert bei Erkennen einer bestimmten Abweichung von der Referenzspannung, und wobei das Netzteil (50) einen Schalter (60) aufweist, der bei Vorliegen des Fehlerzustandssignals die Eingangsspannung (Ue) des Spannungswandlers (52) abschaltet, weiterhin mit zumindest einem Watchdog (70, 71), der mit der fehlersicheren Steuer/Auswerteeinheit (28) verbunden ist und der bei Erkennen eines Fehlerzustands der Steuer/Auswerteeinheit (28) ein Fehlerzustandssignal an den Schalter (60) liefert, um die Eingangsspannung (Ue) des Spannungswandlers (52) abzuschalten,

2. Sicherheitsschaltvorrichtung nach Anspruch 1, wobei der Fehlerdetektor (54) weiterhin einen Speicher (58) zum Speichern des Fehlerzustandssignals aufweist, der einen mit dem Vergleicher (56) verbundenen ersten Eingang (58a) aufweist und zumindest einen den Schalter (60) ansteuernden Ausgang (58c) aufweist.

3. Sicherheitsschaltvorrichtung nach Anspruch 2, wobei der Speicher (56) weiterhin einen zweiten Eingang (58b) aufweist, der bei Einschalten der Eingangsspannung (Ue) ein Signal zum Beenden des Speicherns des Fehlerzustandssignals empfängt.

4. Sicherheitsschaltvorrichtung nach Anspruch 2 oder Anspruch 3, wobei der Speicher (58) eine bistabile Kippstufe ist, insbesondere wobei der erste Eingang (58a) ein Rücksetz-Eingang (R) und/oder wobei der zweite Eingang (58b) ein Setz-Eingang (S) der bistabilen Kippstufe ist.

5. Sicherheitsschaltvorrichtung nach einem der Ansprüche 1 bis 4, wobei der Fehlerdetektor (54) ein Fehlerzustandssignal liefert bei Erkennen einer bestimmten Überschreitung der Referenzspannung, so dass der Fehlerzustand einer Überspannung der Ausgangsspannung (Ua) entspricht.

6. Sicherheitsschaltvorrichtung nach einem der Ansprüche 1 bis 5, wobei der Fehlerdetektor (54) ein Fehlerzustandssignal liefert bei Erkennen einer bestimmten Unterschreitung der Referenzspannung, so dass der Fehlerzustand einer Unterspannung der Ausgangsspannung (Ua) entspricht.

7. Sicherheitsschaltvorrichtung nach einem der Ansprüche 1 bis 6, wobei der Schalter (60) im Strompfad eines Eingangs des Spannungswandlers (52) angeordnet ist, so dass der Schalter (60) bei Vorliegen des Fehlerzustandssignals die Stromzufuhr zu dem Eingang des Spannungswandlers (52) unterbricht.

8. Sicherheitsschaltvorrichtung nach einem der Ansprüche 1 bis 7, wobei der Spannungswandler (52) einen Schaltregler (66) zur Regelung eines Stromflusses durch den Spannungswandler (52) aufweist, um die Ausgangsspannung (Ua) auf dem definierten Ausgangsspannungswert zu halten, insbesondere wobei der Schalter (52) zum Abschalten der Eingangsspannung (Ue) ein Schalttransistor des Schaltreglers (66) ist.

9. Sicherheitsschaltvorrichtung nach Anspruch 8, wobei der Schaltregler (66) einen Eingang (67) für eine Schaltreglerversorgungsspannung aufweist, und wobei der Schalter (60) im Strompfad des Eingangs (67) für die Schaltreglerversorgungsspannung angeordnet ist, so dass der Schalter (60) bei Vorliegen des Fehlerzustandssignals die Stromzufuhr zu dem Eingang (67) des Schaltreglers (66) unterbricht.

10. Sicherheitsschaltvorrichtung nach einem der Ansprüche 1 bis 9, wobei die fehlersicherere Steuer/Auswerteeinheit (28) zumindest zwei Verarbeitungseinheiten (28a, 28b) aufweist, die das Eingangssignal redundant zueinander verarbeiten und logische Signalverknüpfungen vornehmen, um in Abhängigkeit davon das Ausgangssignal zu erzeugen.

11. Sicherheitsschaltvorrichtung nach einem der Ansprüche 1 bis 10, wobei das Netzteil (50) zum Erzeugen mehrerer Betriebsspannungen für die fehlersichere Steuer/Auswerteeinheit (28) ausgebildet ist, wobei das Netzteil (50) mehrere Spannungswandler aufweist, um die Eingangspannung (Ue) in mehrere Ausgangsspannungen (U1, U2, U3, U4) jeweils eines definierten Ausgangsspannungswertes umzuwandeln, wobei jede Ausgangsspannung (U1, U2, U3, U4) jeweils einer Betriebsspannung für die Steuer/Auswerteeinheit (28) entspricht.

12. Sicherheitsschaltvorrichtung nach Anspruch 11, und wobei die Sicherheitsschaltvorrichtung (1) weiterhin einen Addierer (80) zum Bereitstellen einer Summenspannung (Usum) aufweist, die der Summe der mehreren Betriebsspannungen (U1, U2, U3, U4) entspricht, und wobei die Summenspannung (Usum) die momentan vorhandene Ausgangsspannung (Ua) für den Vergleicher (56) ist.

13. Sicherheitsschaltvorrichtung nach Anspruch 10 und einem der Ansprüche 11 oder 12, wobei die zumindest zwei Verarbeitungseinheiten (28a, 28b) unterschiedliche Betriebsspannungen der von dem Netzteil (50) erzeugten mehreren Betriebsspannungen haben.

14. Sicherheitsschaltvorrichtung nach einem der Ansprüche 1 bis 13, wobei die fehlersichere Steuer/Auswerteeinheit (28) einen Eingang zum Empfangen eines Statussignals aufweist, das von dem Fehlerdetektor (54) bei Erkennen eines Fehlerzustandes des Spannungswandlers (52) erzeugt wird, und wobei die fehlersichere Steuer/Auswerteeinheit (28) einen Speicher zum Speichern eines entsprechenden Fehlereintrags bei Empfang des Statussignals aufweist.

## Claims

1. A safety switching device (1) for switching on or off a hazardous installation (10) in a failsafe manner, comprising an input for receiving an input signal, comprising a failsafe control/ evaluating unit (28) which processes the input signal in order to generate an output signal for switching on or off the hazardous installation (10) in dependence thereon, and comprising a power supply (50) for providing at least one operating voltage for the control/evaluating unit (28), wherein the power supply (50) has a voltage converter (52) for converting an input voltage (Uₑ) into an output voltage (Uₐ) of a defined output voltage value, said output voltage corresponding to the operating voltage, **characterized in that** the power supply (50) has a fault detector (54) for detecting a fault condition of the voltage converter (52), wherein the fault detector (54) has a comparator (56) for comparing a currently present output voltage (Uₐ) with a defined reference voltage, wherein the fault detector (54) provides a fault condition signal upon detection of a particular deviation from the reference voltage, wherein the power supply (50) has a switch (60) which disconnects the input voltage (Uₑ) of the voltage converter (52) when the fault condition signal is present, further comprising at least one watchdog (70, 71) which is connected to the failsafe control/evaluating unit (28) and which delivers a fault condition signal to the switch (60) on detection of a fault condition of the control/evaluating unit (28) in order to disconnect the input voltage (Uₑ) of the voltage converter (52).

2. The safety switching device according to Claim 1, wherein the fault detector (54) further has a memory (58) for storing the fault condition signal, said memory having a first input (58a) connected to the comparator (56) and at least one output (58c) activating the switch (60).

3. The safety switching device according to Claim 2, wherein the memory (56) further has a second input (58b) which receives a signal, upon the input voltage (Uₑ) being switched on, for ending the storing of the fault condition signal.

4. The safety switching device according to Claim 2 or Claim 3, wherein the memory (58) is a bistable flipflop, especially wherein the first input (58a) is a reset input (R) and/or wherein the second input (58b) is a set input (S) of the bistable flipflop.

5. The safety switching device according to one of Claims 1 to 4, wherein the fault detector (54) provides a fault condition signal upon detection of a particular exceedance of the reference voltage so that the fault condition corresponds to an overvoltage of the output voltage (Uₐ).

6. The safety switching device according to one of Claims 1 to 5, wherein the fault detector (54) provides a fault condition signal upon detection of a particular shortfall of the reference voltage so that the fault condition corresponds to an undervoltage of the output voltage (Uₐ).

7. The safety switching device according to one of Claims 1 to 6, wherein the switch (60) is arranged in a current path to an input of the voltage converter (52) so that the switch (60) interrupts the current supply to the input of the voltage converter (52) when the fault condition signal is present.

8. The safety switching device according to one of Claims 1 to 7, wherein the voltage converter (52) has a switched-mode regulator (66) for regulating a current flow through the voltage converter (52) in order to keep the output voltage (Uₐ) at the defined output voltage value, especially wherein the switch (52) for disconnecting the input voltage (Uₑ) is a switching transistor of the switched-mode regulator (66).

9. The safety switching device according to Claim 8, wherein the switched-mode regulator (66) has an input (67) for a switched-mode regulator supply voltage and wherein the switch (60) is arranged in a current path to the input (67) for the switched-mode regulator supply voltage so that the switch (60) interrupts the current supply to the input (67) of the switched-mode regulator (66) when the fault condition signal is present.

10. The safety switching device according to one of Claims 1 to 9, wherein the failsafe control/evaluating unit (28) has at least two processing units (28a, 28b) which process the input signal redundantly with respect to one another and perform logical signal combinations in order to generate the output signal in dependence thereon.

11. The safety switching device according to one of Claims 1 to 10, wherein the power supply (50) is designed for generating a plurality of operating voltages for the failsafe control/evaluating unit (28), wherein the power supply (50) has several voltage converters in order to convert the input voltage (Uₑ) into several output voltages (U₁, U₂, U₃, U₄) each having a defined output voltage value, wherein said output voltages (U₁, U₂, U₃, U₄) each correspond to a respective operating voltage for the control/evaluating unit (28).

12. The safety switching device according to Claim 11, further comprising an adder (80) for providing an aggregate voltage (Uₛᵤₘ) which corresponds to the sum of the plurality of operating voltages (U₁, U₂, U₃, U₄), and wherein the aggregate voltage (Uₛᵤₘ) is the currently present output voltage (Uₐ) for the comparator (56).

13. The safety switching device according to Claim 10 and one of Claims 11 or 12, wherein the at least two processing units (28a, 28b) use different operating voltages from the plurality of operating voltages generated by the power supply (50).

14. The safety switching device according to one of Claims 1 to 13, wherein the failsafe control/evaluating unit (28) has an input for receiving a status signal which is generated by the fault detector (54) upon detecting a fault condition of the voltage converter (52), and wherein the failsafe control/evaluating unit (28) has a memory for storing a corresponding fault entry upon receiving the status signal.

## Revendications

1. Dispositif de commutation de sécurité (1) destiné à la mise en circuit ou hors circuit à sécurité intégrée d'un équipement (10) dangereux, comprenant une entrée destinée à accueillir un signal d'entrée, comprenant une unité de commande/interprétation (28) à sécurité intégrée qui traite le signal d'entrée afin de générer en fonction de celui-ci un signal de sortie destiné à la mise en circuit ou hors circuit de l'équipement (10) dangereux, et comprenant une alimentation secteur (50) destinée à délivrer au moins une tension de service pour l'unité de commande/interprétation (28), l'alimentation secteur (50) possédant un convertisseur de tension (52) destiné à convertir une tension d'entrée (Ue) en une tension de sortie (Ua) correspondant à la tension de service et ayant une valeur de tension de sortie définie, **caractérisé en ce que** l'alimentation secteur (50) possède un détecteur de défaut (54) destiné à reconnaître un état de défaut du convertisseur de tension (52), le détecteur de défaut (54) possédant un comparateur (56) destiné à comparer la tension de sortie (Ua) momentanément disponible à une tension de référence définie, le détecteur de défaut (54) délivrant un signal d'état de défaut en cas de reconnaissance d'un écart défini par rapport à la tension de référence, et l'alimentation secteur (50) possédant un commutateur (60) qui, en présence du signal d'état de défaut, met hors circuit la tension d'entrée (Ue) du convertisseur de tension (52), comprenant en outre un chien de garde (70, 71) qui est relié à l'unité de commande/interprétation (28) à sécurité intégrée et qui, en cas de reconnaissance d'un état de défaut de l'unité de commande/interprétation (28), délivre un signal d'état de défaut au commutateur (60) afin de mettre hors circuit la tension d'entrée (Ue) du convertisseur de tension (52).

2. Dispositif de commutation de sécurité selon la revendication 1, le détecteur de défaut (54) possédant en outre une mémoire (58) destinée à mémoriser le signal d'état de défaut, laquelle possède une première entrée (58a) reliée au comparateur (56) et au moins une sortie (58c) qui pilote le commutateur (60).

3. Dispositif de commutation de sécurité selon la revendication 2, la mémoire (56) possédant en outre une deuxième entrée (58b) qui, lors de la mise en circuit de la tension d'entrée (Ue), reçoit un signal servant à mettre fin à la mémorisation du signal d'état de défaut.

4. Dispositif de commutation de sécurité selon la revendication 2 ou la revendication 3, la mémoire (58) étant une bascule bistable, la première entrée (58a) étant notamment une entrée de réarmement (R) et/ou la deuxième entrée (58b) étant notamment une entrée d'activation (S) de la bascule bistable.

5. Dispositif de commutation de sécurité selon l'une des revendications 1 à 4, le détecteur de défaut (54) délivrant un signal d'état de défaut en cas de reconnaissance d'un franchissement vers le haut donné de la tension de référence, de sorte que l'état de défaut correspond à une surtension de la tension de sortie (Ua).

6. Dispositif de commutation de sécurité selon l'une des revendications 1 à 5, le détecteur de défaut (54) délivrant un signal d'état de défaut en cas de reconnaissance d'un franchissement vers le bas donné de la tension de référence, de sorte que l'état de défaut correspond à une sous-tension de la tension de sortie (Ua).

7. Dispositif de commutation de sécurité selon l'une des revendications 1 à 6, le commutateur (60) étant disposé dans le trajet du courant d'une entrée du convertisseur de tension (52), de sorte qu'en présence du signal d'état de défaut, le commutateur (60) interrompt l'arrivée du courant vers l'entrée du convertisseur de tension (52).

8. Dispositif de commutation de sécurité selon l'une des revendications 1 à 7, le convertisseur de tension (52) possédant un régulateur de commutation (66) destiné à réguler un flux de courant à travers le convertisseur de tension (52) afin de maintenir la tension de sortie (Ua) à la valeur de tension de sortie définie, le commutateur (52) destiné à mettre hors circuit la tension d'entrée (Ue) étant notamment un transistor de commutation du régulateur de commutation (66).

9. Dispositif de commutation de sécurité selon la revendication 8, le régulateur de commutation (66) possédant une entrée (67) pour une tension d'alimentation de régulateur de commutation, et le commutateur (60) étant disposé dans le trajet du courant de l'entrée (67) pour la tension d'alimentation de régulateur de commutation, de sorte que le commutateur (60) interrompt l'arrivée du courant vers l'entrée (67) du régulateur de commutation (66) en présence du signal d'état de défaut.

10. Dispositif de commutation de sécurité selon l'une des revendications 1 à 9, l'unité de commande/interprétation (28) à sécurité intégrée possédant au moins deux unités de traitement (28a, 28b) qui traitent le signal d'entrée de manière redondante l'une par rapport à l'autre et procèdent à des liaisons logiques des signaux afin de générer le signal de sortie en fonction de celles-ci.

11. Dispositif de commutation de sécurité selon l'une des revendications 1 à 10, l'alimentation secteur (50) étant configurée pour générer plusieurs tensions de service pour l'unité de commande/interprétation (28) à sécurité intégrée, l'alimentation secteur (50) possédant plusieurs convertisseurs de tension pour convertir la tension d'entrée (Ue) en plusieurs tensions de sortie (U1, U2, U3, U4) ayant respectivement une valeur de tension de sortie définie, chaque tension de sortie (U1, U2, U3, U4) correspondant respectivement à une tension de service pour l'unité de commande/interprétation (28).

12. Dispositif de commutation de sécurité selon la revendication 11, et le dispositif de commutation de sécurité (1) possédant en outre un additionneur (80) destiné à fournir une tension totale (Usum) qui correspond à la somme des plusieurs tensions de service (U1, U2, U3, U4), la tension totale (Usum) étant la tension de sortie (Ua) momentanément présente pour le comparateur (56).

13. Dispositif de commutation de sécurité selon la revendication 10 et l'une des revendications 11 ou 12, les au moins deux unités de traitement (28a, 28b) ayant des tensions de service différentes parmi les plusieurs tensions de service générées par l'alimentation secteur (50).

14. Dispositif de commutation de sécurité selon l'une des revendications 1 à 13, l'unité de commande/interprétation (28) à sécurité intégrée possédant une entrée destinée à recevoir un signal d'état qui est généré par le détecteur de défaut (54) lors de la reconnaissance d'un état de défaut du convertisseur de tension (52), et l'unité de commande/interprétation (28) à sécurité intégrée possédant une mémoire destinée à mémoriser un enregistrement de défaut correspondant lors de la réception du signal d'état.
